# EUROPEAN PATENT APPLICATION

(11) **EP 2 325 754 A1**
(43) Date of publication of application: **25.05.2011**
(21) Application number: 09812901.8
(22) Date of filing: 10.09.2009
(51) Int. Cl.: G06F 13/00

(54) **MESSAGE DISTRIBUTION SYSTEM AND DISTRIBUTION METHOD**

(30) Priority: 12.09.2008 JP 2008234297
(71) Applicant: NEC Corporation, Minato-ku Tokyo 108-8001 (JP)
(72) Inventor: TAKENOUCHI, Takao, Tokyo 108-8001 (JP); MINAMIZAWA, Takeaki, Tokyo 108-8001 (JP)
(74) Representative: Vossius & Partner
(86) International application number: PCT/JP2009/004500
(87) International publication number: WO 2010/029752

(57) **Abstract**

A message delivery system for delivering a message to a user includes: a plurality of delivery systems (300A, 300B) which are run by a plurality carriers respectively and deliver information to subscribers to the respective carriers; and an ID management means (100). When a delivery means receives a request to deliver a message, the delivery means transmits to the ID management means a demand for user ID resolution to deliver the message. Upon receiving the demand for user ID resolution from the delivery means, the ID management means resolves a user ID to which the carrier running the delivery means can deliver and a delivery of the message in question has not been allocated, and returns the user ID as a user ID candidate to the delivery means. The delivery means delivers the message to the user identified by the user ID included in the user ID candidate.

## Description

### [Technical Field]

The present invention relates to message delivery technologies and, more particularly, to a message delivery system in which a message is delivered to a user subscribing to a plurality of carriers, as well as to a delivery method and a program for delivery.

### [Background Art]

Conventionally, a service provider builds up a service by utilizing the functions of a carrier and provides the service such as, for example, sending a message to a user by utilizing a mail address of the user provided by the carrier as a user ID for the user to use the service. On the other hand, an increased number of users subscribe to a plurality of carriers and have a plurality of mail addresses, as in a case where a user uses a carrier employing a fixed network when the user is at home and uses a carrier employing a mobile network while the user is on the move.

Under such a situation, when a service provider delivers a message to a user subscribing to a carrier, the service provider requests the carrier to deliver the message, and the requested carrier delivers the message to the designated user.

Moreover, when a user receives services from a plurality of service providers, the problem arises that it is bothersome to perform user authentication for each individual service if the user is managed with different user IDs for the individual services. To solve such a problem, for example, single sign-on technology is used that utilizes ID federation information in which user IDs for individual services are federated with each other (see NPL 1, for example) .

For technologies related to such ID federation, for example, described in PTL 1 is a technology in which user IDs registered with a plurality of sites are linked with each other, information regarding the user is collected, and the collected result is delivered.

Moreover, for example, described in PTL 2 is a technology in which information about users for a variety of service providers is collected, a user conforming to a condition is extracted based on the collected information, and a message is delivered to the user.

### [Citation List]

### [Patent Literature]

[PTL 1]
   Japanese Patent Application Unexamined Publication No. 2005-12867
[PTL 2]
   Japanese Patent Application Unexamined Publication No. 2004-54312

### [Non Patent Literature]

[NPL 1]
   "Liberty ID-FF Architecture Overview", [Online], Liberty Alliance project, [retrieved on July 1, 2008], Internet <http://www.projectliberty.org/liberty/content/download/ 318/2366/file/draft-liberty-idff-arch-overview-1.2-errat a-v1.0pdf>

### [Summary of Invention]

### [Technical Problem]

However, the above-described message delivery method has the problem that if a user subscribes to a plurality of carriers, the user may receive the same message from each of the carriers.

The technology described in PTL 1 is a technology for generating ID federation information, not going as far as to consider utilizing it for allocation of a message delivery request. Moreover, the technology described in PTL 2 aims to make it possible to deliver information that is more preferable to each individual user by collecting users' attributes and characteristics from a plurality of service providers, not making it possible to efficiently deliver a message to a user subscribing to a plurality of carriers.

The present invention is made in the light of the foregoing, and an object thereof is to provide a message delivery system, a delivery method, an ID management device, and a program for delivery that enable efficient message delivery to a user subscribing to a plurality of carriers.

### [Solution to Problem]

A message delivery system according to the present invention is a message delivery system for delivering a message to a user, characterized by: a plurality of delivery means which are run by a plurality of carriers respectively and deliver information to subscribers to the respective carriers; and an ID management means which can communicate with the plurality of delivery means, wherein when a delivery means receives a request to deliver a message, the delivery means transmits to the ID management means a request for user identifier resolution to deliver the message, upon receiving the request for user identifier resolution from the delivery means, the ID management means resolves a user identifier to which a carrier running the delivery means can deliver and to which a delivery of the message has not been allocated, and returns the user identifier as a user identifier candidate to the delivery means, and the delivery means delivers the message to a user identified by the user identifier included in the user identifier candidate.

A message delivery method according to the present invention is a message delivery method in a communication system for delivering a message to a user, wherein the communication system includes: a plurality of delivery means which are run by a plurality of carriers respectively and deliver information to subscribers to the respective carriers; and an ID management means which can communicate with the plurality of delivery means, the method characterized by comprising: by a delivery means, upon receiving a request to deliver a message, transmitting to the ID management means a request for user identifier resolution to deliver the message ; by the ID management means, upon receiving the request for user identifier resolution from the delivery means, resolving a user identifier to which a carrier running the delivery means can deliver and to which a delivery of the message has not been allocated, and returning the user identifier as a user identifier candidate to the delivery means; and by the delivery means, delivering the message to a user identified by the user identifier included in the user identifier candidate.

An ID management device according to the present invention is an ID management device which can communicate with a plurality of delivery means run by a plurality of carriers respectively and delivering information to subscribers to the respective carriers in a message delivery system for delivering a message to a user, characterized by comprising: a user identifier resolution means which, upon receiving a request for user identifier resolution from a delivery means, resolves a user identifier to which a carrier running the delivery means can deliver and to which a delivery of the message has not been allocated; and a transmission means which transmits a deliveree candidate list including the resolved user identifier to the delivery means.

A program according to the present invention is a program causing a computer to function as an ID management device which can communicate with a plurality of delivery means run by a plurality of carriers respectively and delivering information to subscribers to the respective carriers in a communication system for delivering a message to a user, the program characterized by causing the computer to execute the functions of: receiving a request for user identifier resolution to deliver the message from a delivery means; and upon receiving the request for user identifier resolution from the delivery means, resolving a user identifier to which a carrier running the delivery means can deliver and to which a delivery of the message has not been allocated and returning the user identifier as a user identifier candidate to the delivery means.

### [Advantageous Effects of Invention]

According to the present invention, even when a user subscribes to a plurality of carriers, it is possible to efficiently deliver a message, preventing the user from receiving the same message multiple times.

### [Brief Description of Drawings]

[FIG. 1]

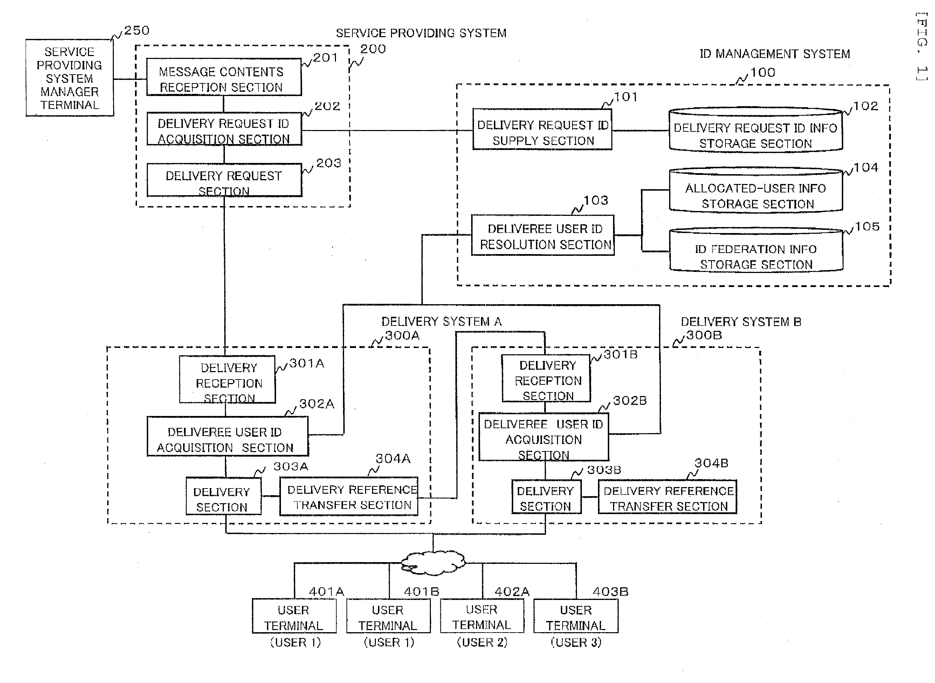

   FIG. 1 is a schematic diagram showing a message delivery system according to a first exemplary embodiment of the present invention.
[FIG. 2]

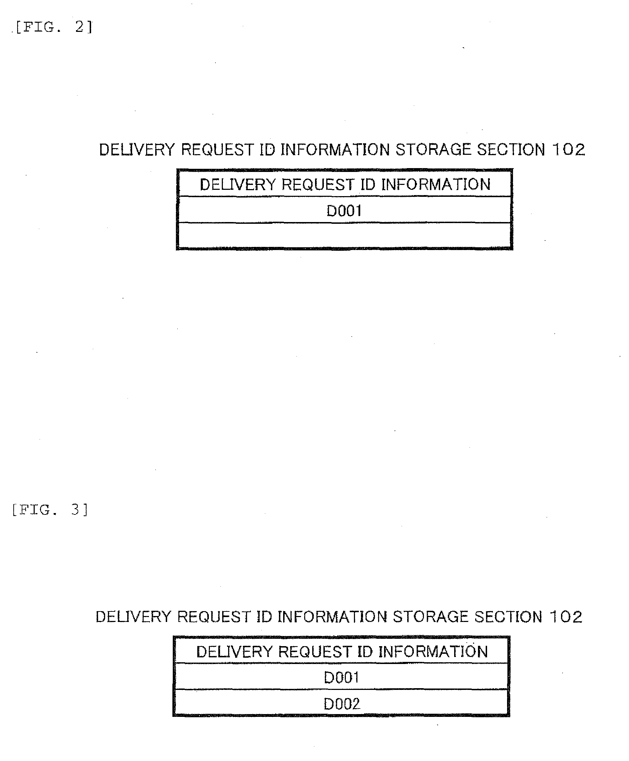

   FIG. 2 is a diagram showing an example of delivery request ID information stored in a delivery request ID information storage section.
[FIG. 3]
   FIG. 3 is a diagram showing an example of the updated delivery request ID information when a new delivery request is issued.
[FIG. 4]

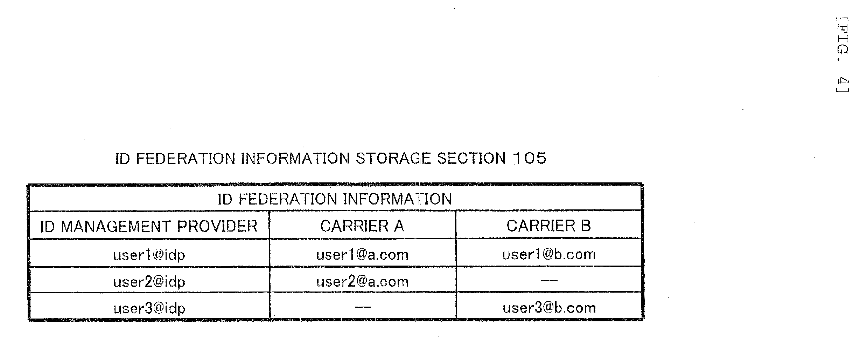

   FIG. 4 is a diagram showing a first example of ID federation information stored in an ID federation information storage section.
[FIG. 5]

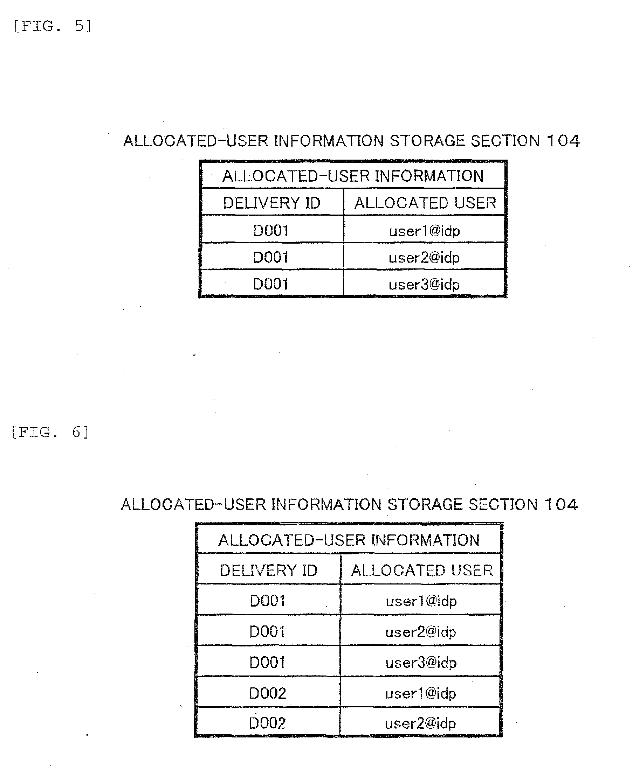

   FIG. 5 is a diagram showing an example of allocated-user information on ID management provider user IDs with respect to a delivery request ID, stored in an allocated-user information storage section.
[FIG. 6]
   FIG. 6 is a diagram showing an example of the updated allocated-user information to which allocated-user information with respect to a new delivery request ID is added.
[FIG. 7]

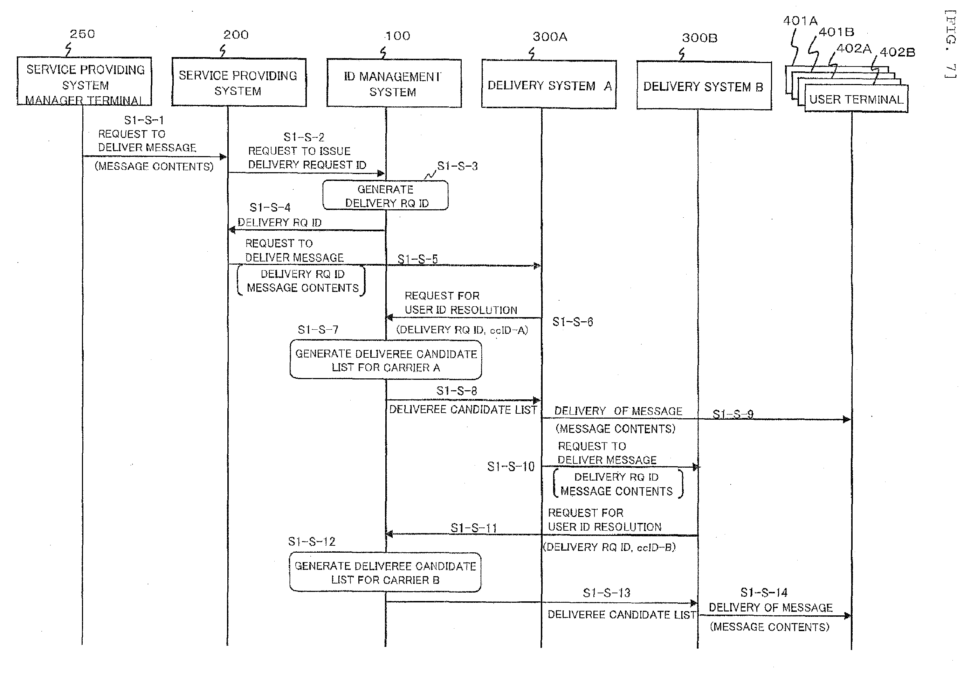

   FIG. 7 is a sequence diagram showing a message delivery method according to the first exemplary embodiment of the present invention.
[FIG. 8]

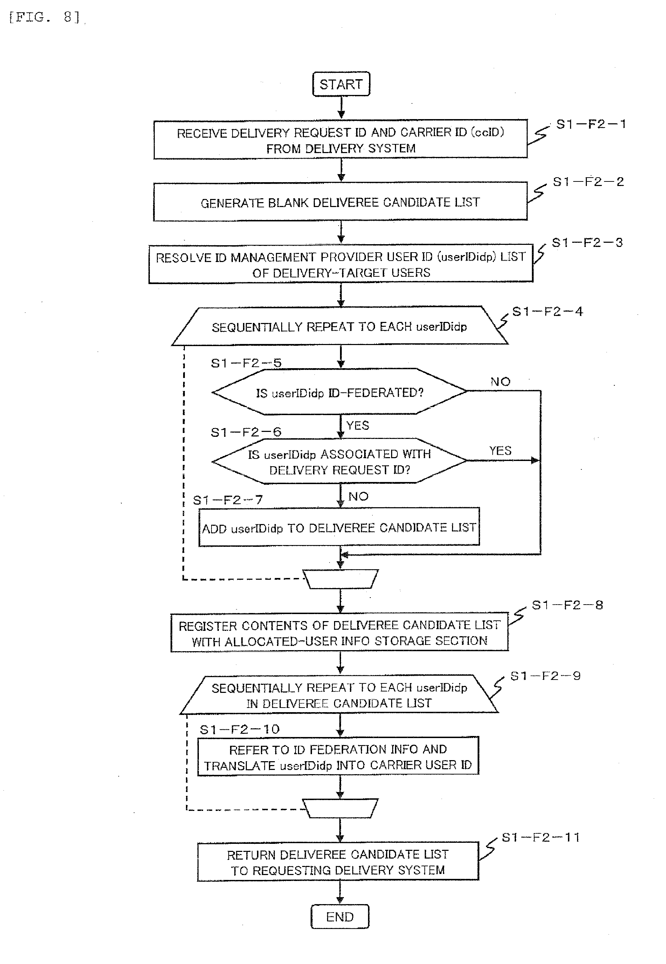

   FIG. 8 is a flowchart for describing operation of a deliveree user ID resolution section in the first exemplary embodiment of the present invention.
[FIG. 9]

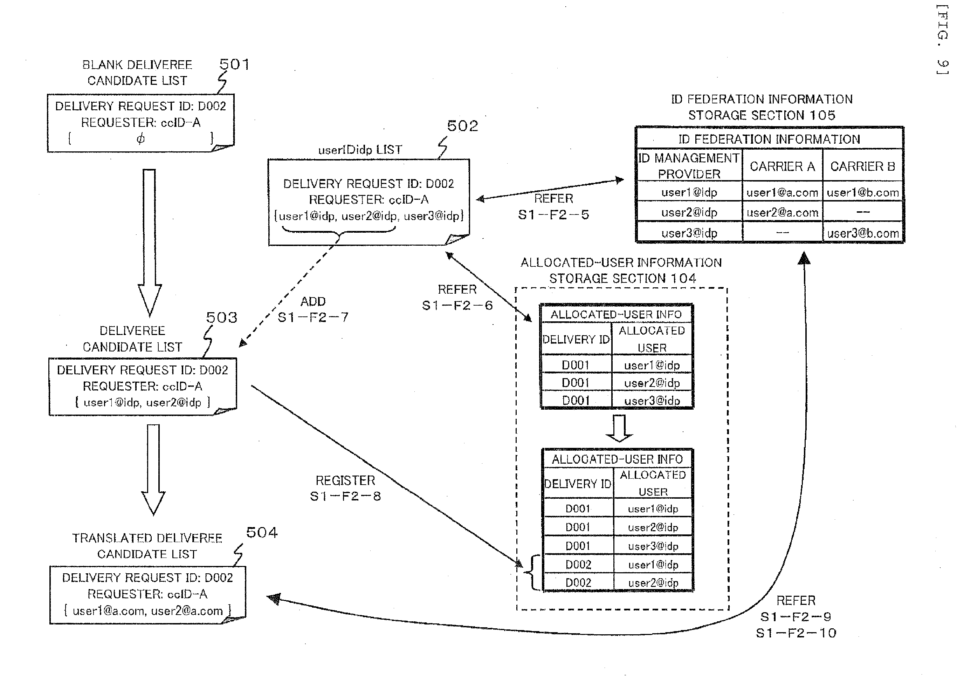

   FIG. 9 is a schematic diagram for describing the operation shown in FIG. 8.
[FIG. 10]

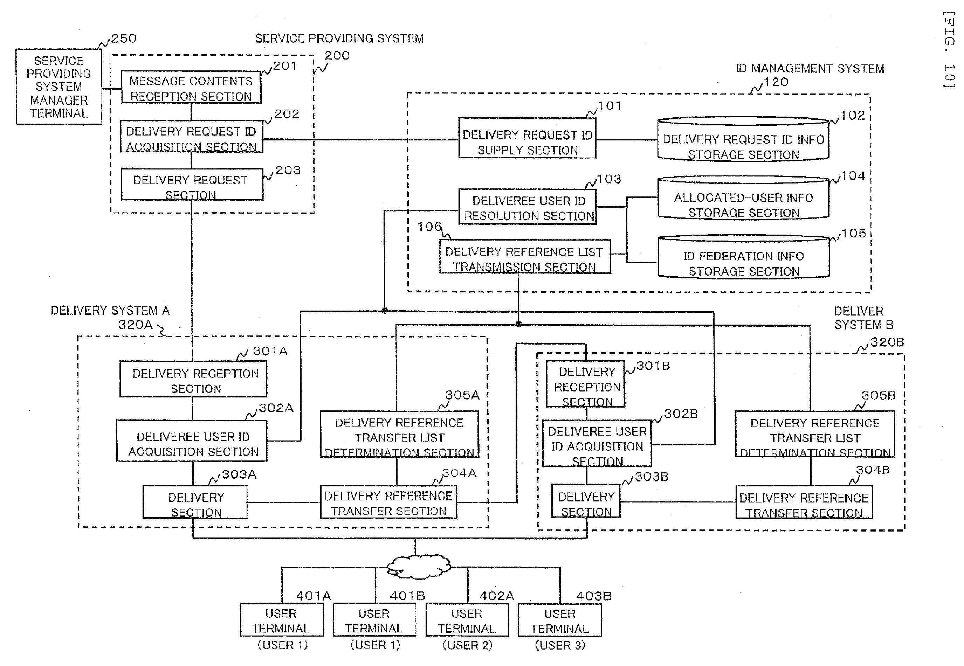

   FIG. 10 is a schematic diagram showing a message delivery system according to a second exemplary embodiment of the present invention,
[FIG. 11]

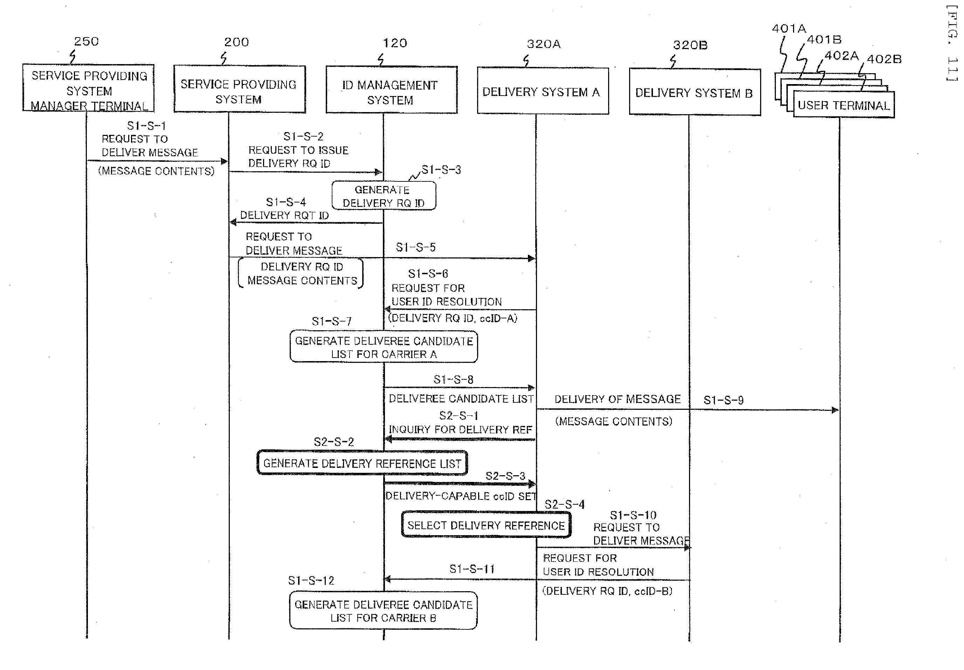

   FIG. 11 is a sequence diagram showing a message delivery method according to the second exemplary embodiment of the present invention.
[FIG. 12]

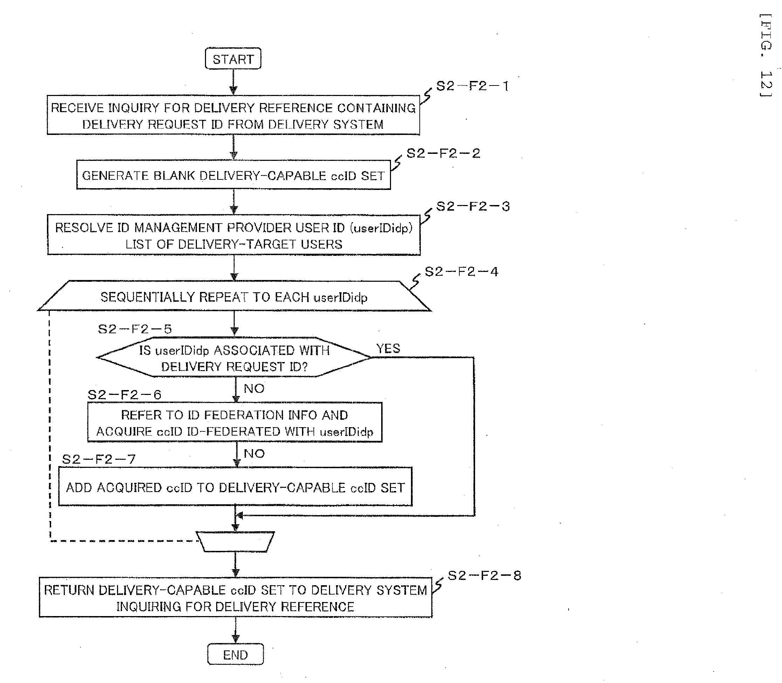

   FIG. 12 is a flowchart for describing operation of the deliveree user ID resolution section and a delivery reference list transmission section in the second exemplary embodiment of the present invention.
[FIG. 13]

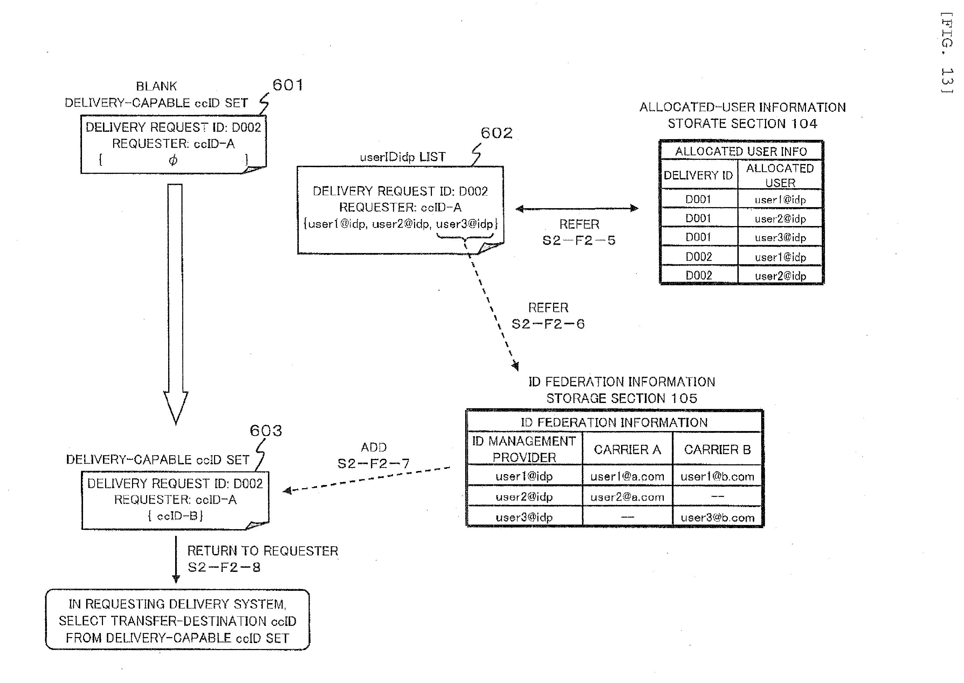

   FIG. 13 is a schematic diagram for describing the operation shown in FIG. 12.
[FIG. 14]

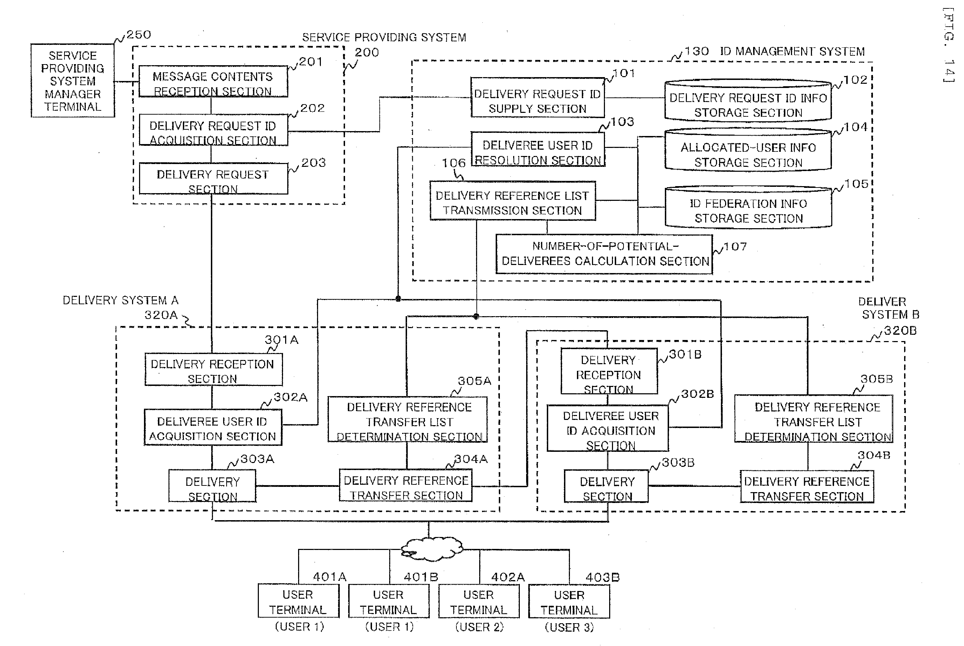

   FIG. 14 is a schematic diagram showing a message delivery system according to a third exemplary embodiment of the present invention.
[FIG. 15]

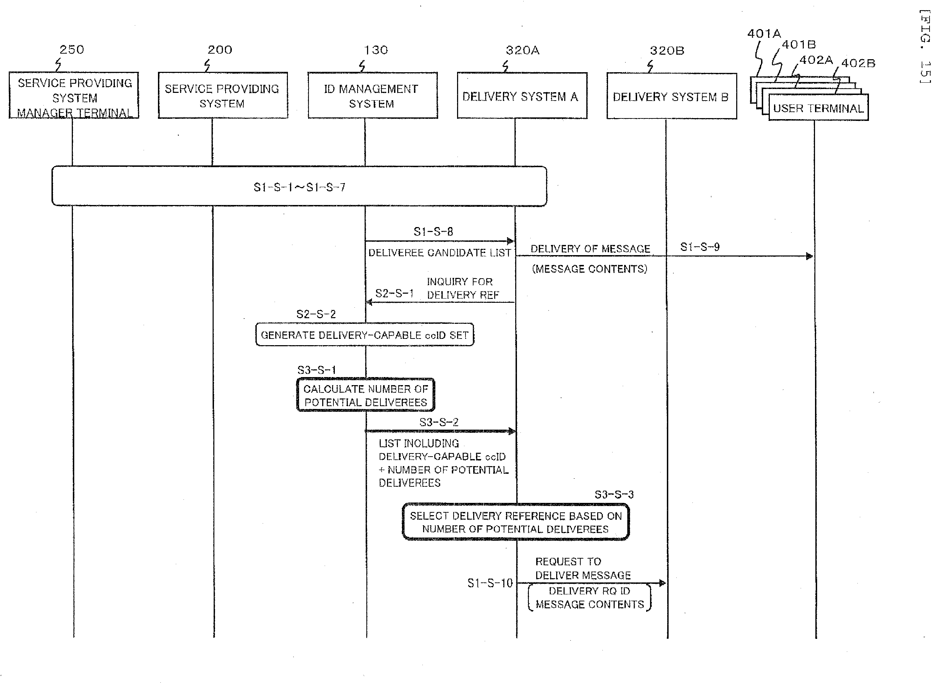

   FIG. 15 is a sequence diagram showing a message delivery method according to the third exemplary embodiment of the present invention.
[FIG. 16]

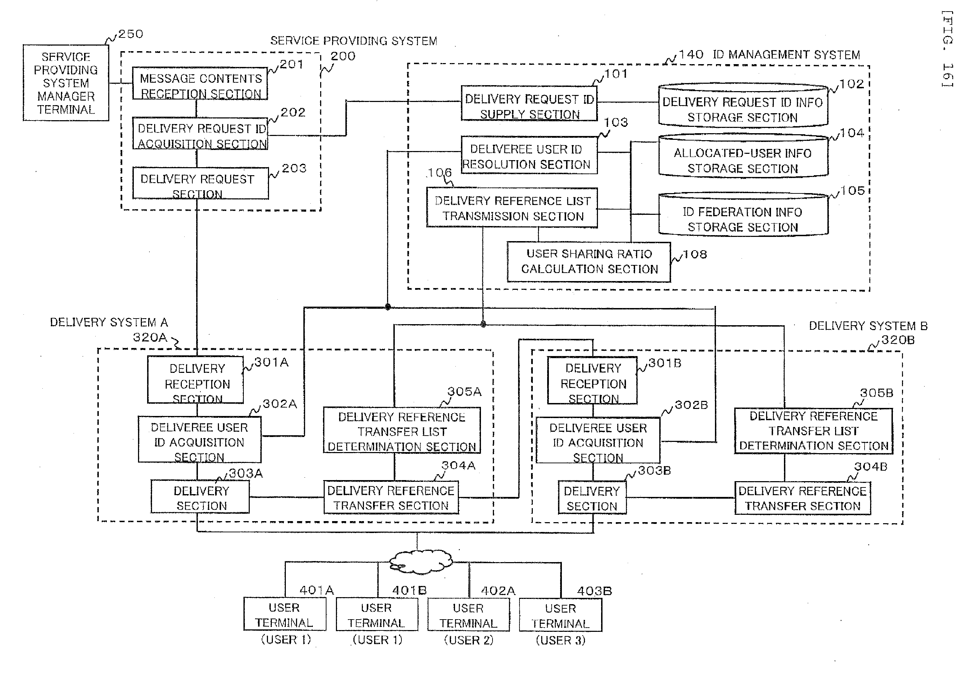

   FIG. 16 is a schematic diagram showing a message delivery system according to a fourth exemplary embodiment of the present invention.
[FIG. 17]

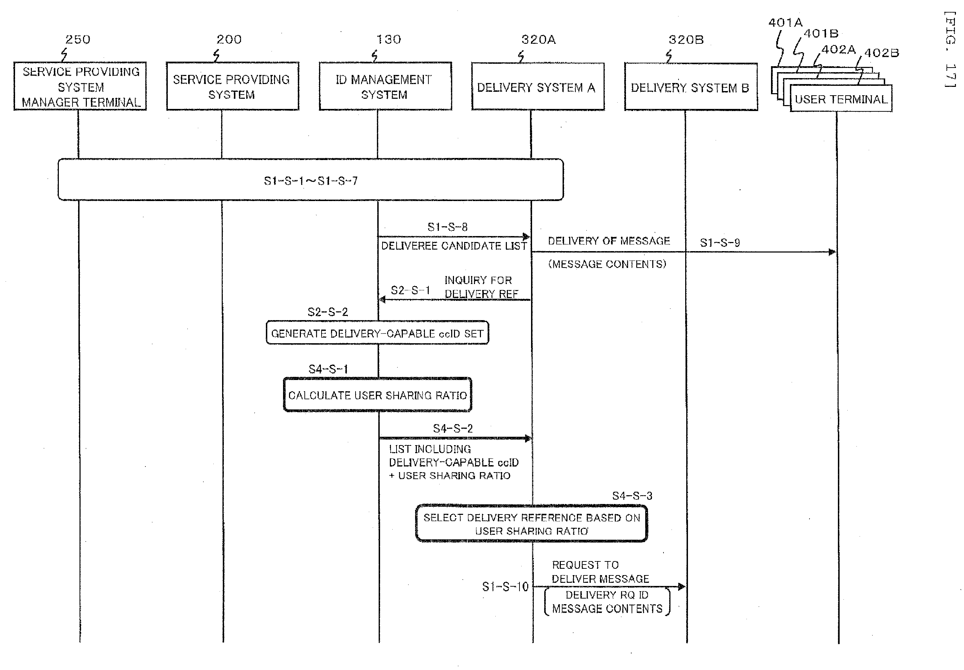

   FIG. 17 is a sequence diagram showing a message delivery method according to the fourth exemplary embodiment of the present invention.
[FIG. 18]

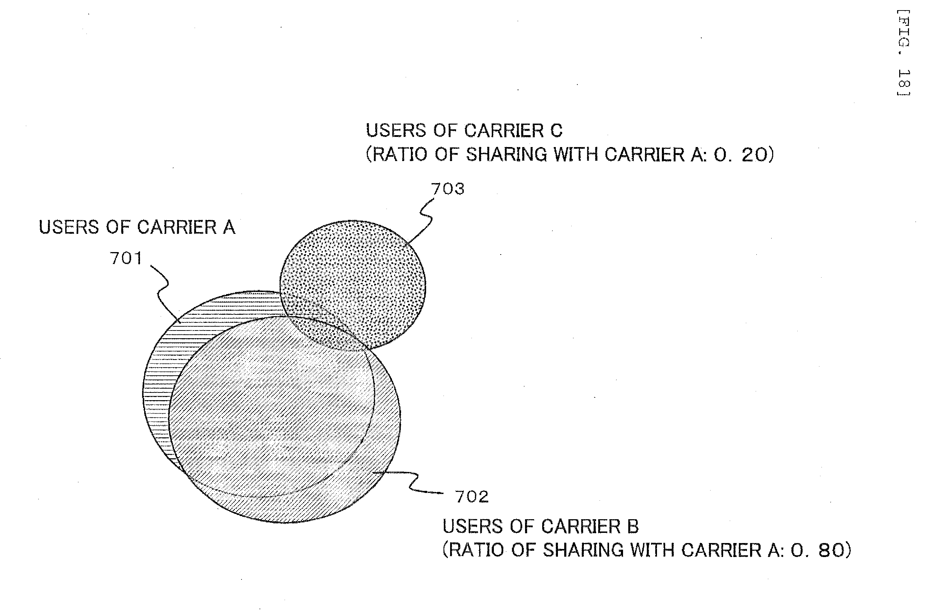

   FIG. 18 is a schematic diagram for describing user sharing ratios between carriers in the fourth exemplary embodiment of the present invention.
[FIG. 19]

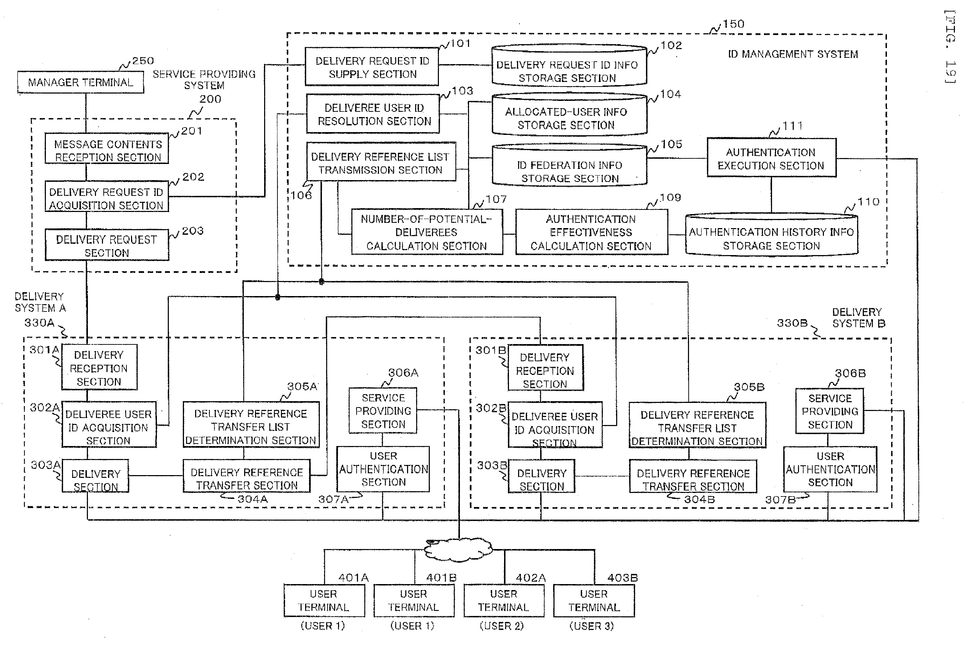

   FIG. 19 is a schematic diagram showing a message delivery system according to a fifth exemplary embodiment of the present invention.
[FIG. 20]

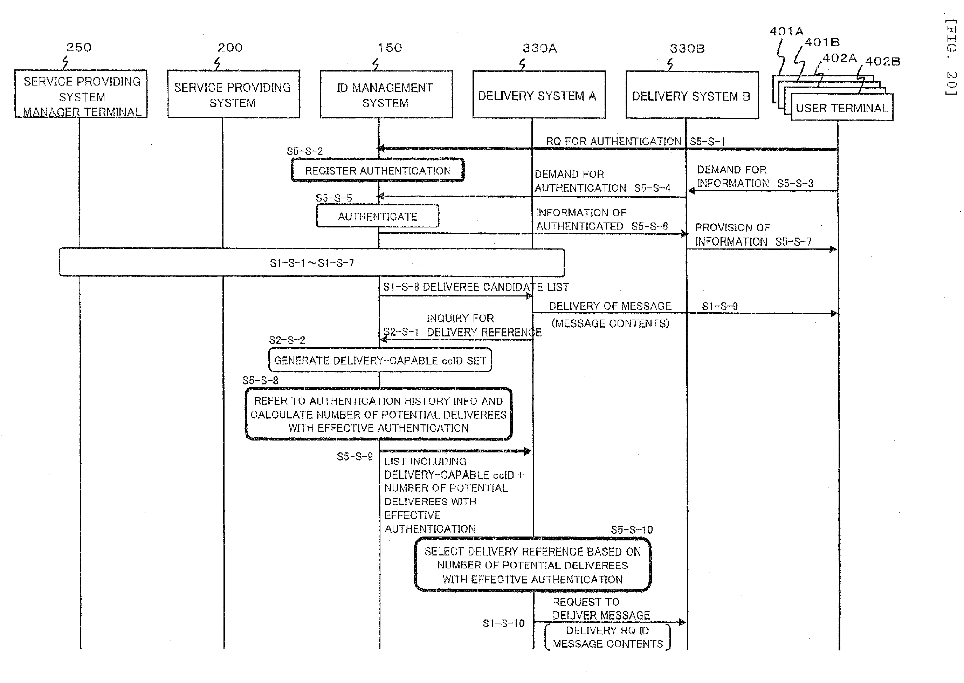

   FIG. 20 is a sequence diagram showing a message delivery method according to the fifth exemplary embodiment of the present invention.
[FIG. 21]

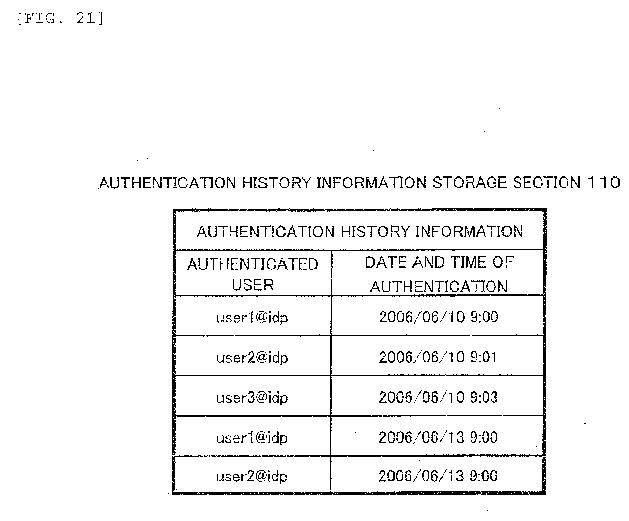

   FIG. 21 is a diagram showing an example of authentication history information stored in an authentication history information storage section.
[FIG. 22]

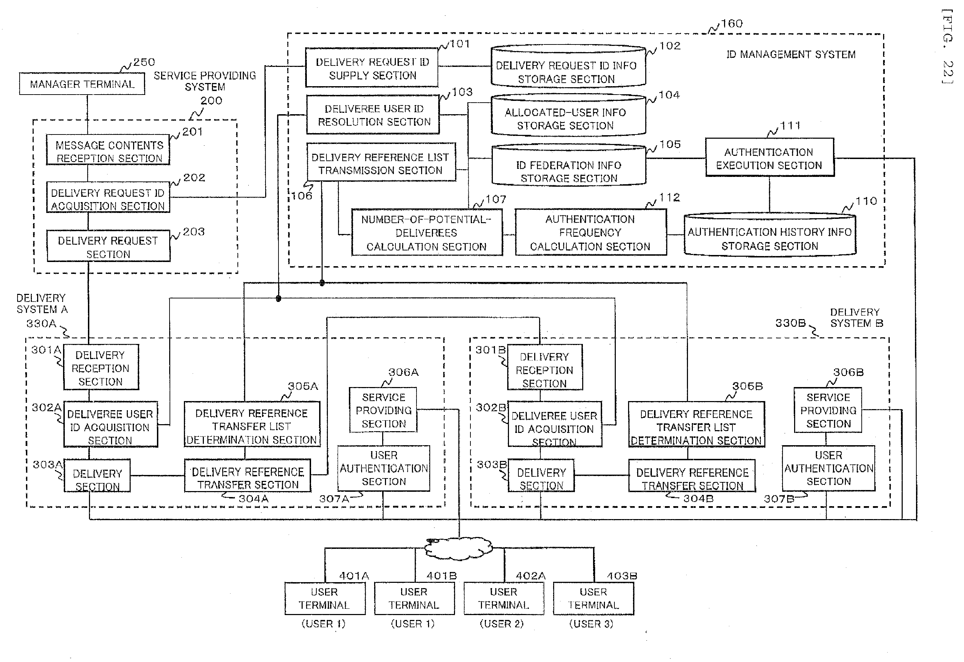

   FIG. 22 is a schematic diagram showing a message delivery system according to a sixth exemplary embodiment of the present invention.
[FIG. 23]

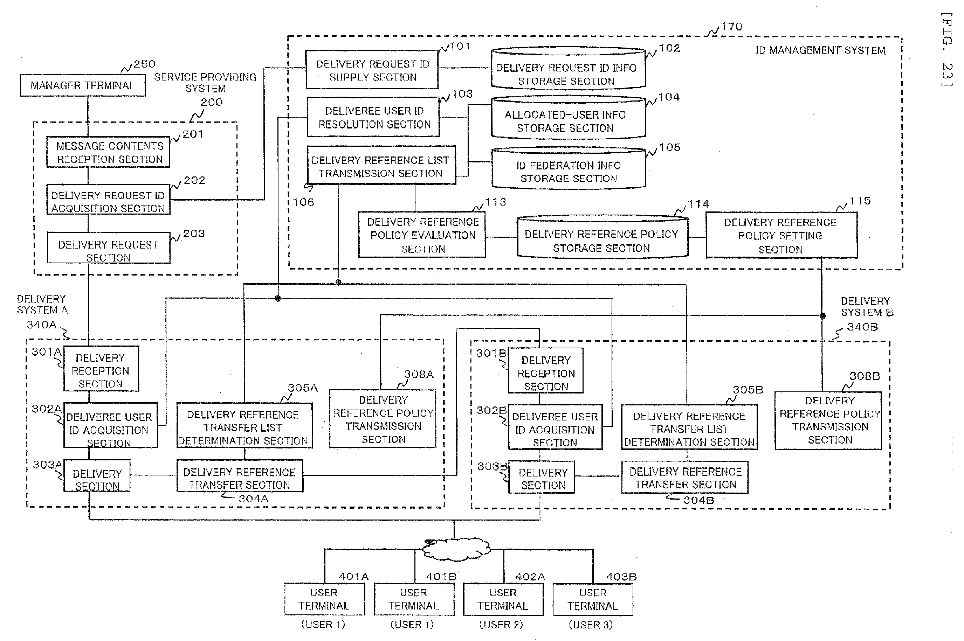

   FIG. 23 is a schematic diagram showing a message delivery system according to a seventh exemplary embodiment of the present invention.
[FIG. 24]

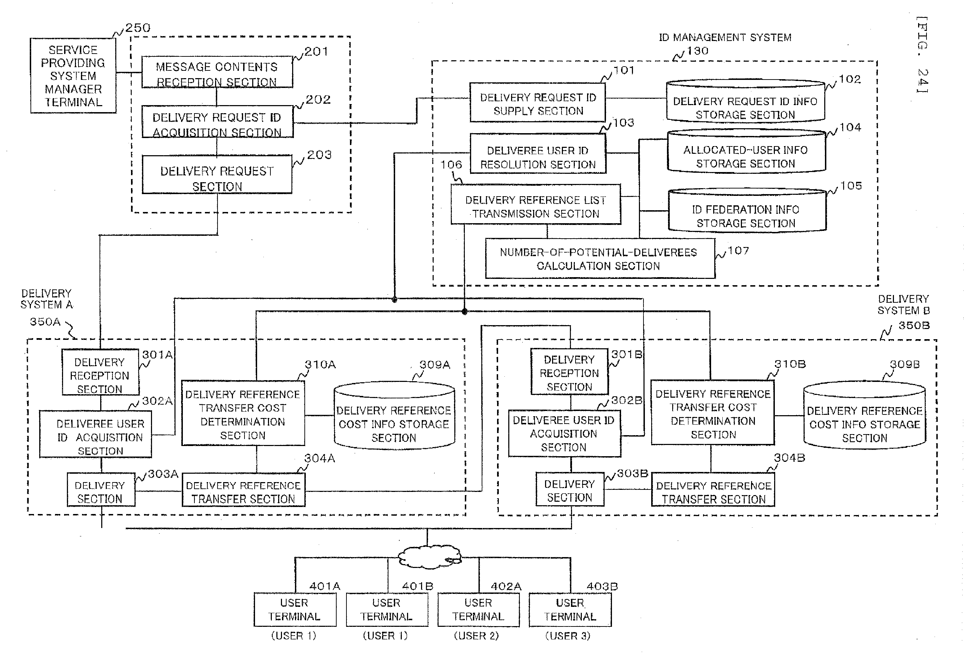

   FIG. 24 is a schematic diagram showing a message delivery system according to an eighth exemplary embodiment of the present invention.
[FIG. 25]

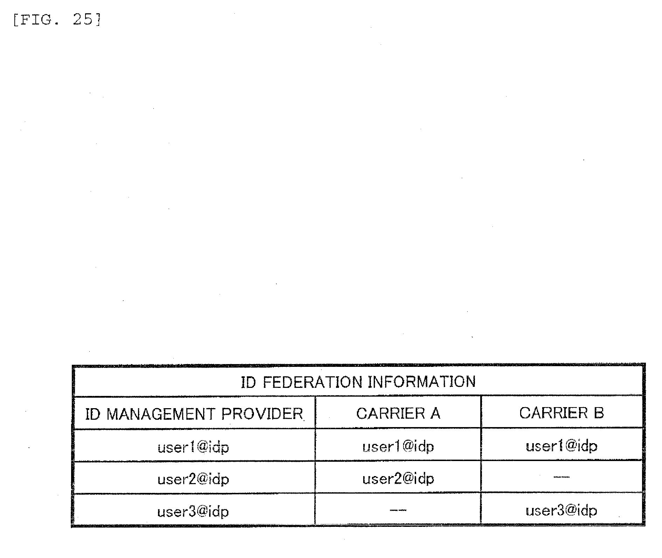

   FIG. 25 is a diagram showing a second example of the ID federation information stored in the ID federation information storage section.
[FIG. 26]

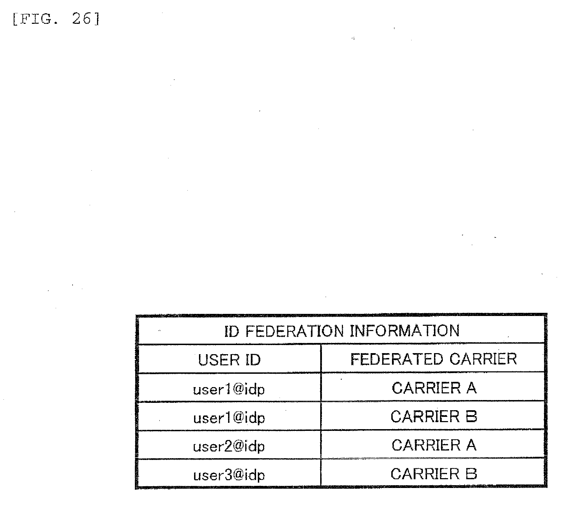

   FIG. 26 is a diagram showing a third example of the ID federation information stored in the ID federation information storage section.

### [Description of Embodiments]

Next, exemplary embodiments of the present invention will be described in detail individually with reference to the drawings. First, a description will be given of terms used in the exemplary embodiments of the present invention.

- A user ID is an identifier uniquely identifying a user who uses a service such as a delivery system of a carrier or a service providing system of a service provider.
- A carrier user ID is a user ID of a user who subscribes to a carrier, managed by the carrier.
- An ID management provider user ID is a user ID of a user, managed by an ID management provider.
- carrier ID is an identifier uniquely identifying a delivery system of a carrier.
- delivery request ID is an identifier uniquely identifying a message delivery request from a service provider.

- ID federation is to make a linkage between user IDs.
- Authentication is to confirm the identification of a user who is requesting access. For example, the identification of a user who is requesting access is confirmed by using a user ID and password.

- Single sign-on is that when authentication is performed on a user ID of a user, it is regarded that authentication is also done on the other ID-federated user IDs. For example, the following case will be considered: a user uses services of a plurality of carriers, has different carrier user IDs on the individual carriers, and also uses a service of an ID management provider to which the user makes single sign-on, wherein the carrier user IDs and ID management provider user ID are ID-federated. In this case, when the user accesses the service of the ID management provider and the user's ID management provider user ID is authenticated, then the user's carrier user IDs ID-federated with the ID management provider user ID are regarded as being also authenticated, enabling the user to use the services of the carriers. Assuming that no single sign-on function is provided, the user needs to do authentication work (such as, for example, entering a user ID and password) for each of the services of the individual carriers, which causes inconvenience.
- A message is information such as an advertisement or a coupon that a service provider desires to convey to a user, including not only text but also image information such as still images and moving images, audio information, and the like.

### 1. First exemplary embodiment

Hereinafter, a first exemplary embodiment of the present invention will be described in detail with reference to the drawings.

### 1.1) System configuration

Referring to FIG. 1, as an example, a message delivery system according to the present exemplary embodiment is assumed to be composed of an ID management system 100, a service providing system 200, a service providing system manager terminal 250, delivery systems 300A and 300B, and user terminals 401A, 401B, 402A, and 403B. Moreover, the ID management system 100, service providing system 200, and delivery systems 300A and 300B are connected as shown in FIG. 1 and can communicate with each other. However, these connections can also be implemented through a network (not shown).

In the present exemplary embodiment, it is assumed that a service provider, carriers A and B, and an ID management provider are present as business entities and users 1, 2, and 3 are present as users, and that the user 1 is on contracts with both of the carriers A and B, the user 2 is on a contract with only the carrier A, and the user 3 is on a contract with only the carrier B. Moreover, in the following description, the carrier IDs of the carriers A and B will be abbreviated to "ccID-A" and "ccID-B", respectively, and an ID management provider user ID will be abbreviated to "userIDidp", where appropriate.

Further, in the present exemplary embodiment, it is assumed that the carrier user IDs of the user 1 on the carriers A and B are "userl@a.com" and "userl@b.com", respectively, the carrier user ID of the user 2 on the carrier A is "user2@a.com", and the carrier user ID of the user 3 on the carrier B is "user3@b.com".

The ID management system 100 is run by the ID management provider. The service providing system manager terminal 250 and service providing system 200 are run by the service provider. The delivery systems 300A and 300B are delivery systems having the same functionality. The delivery system 300A is run by the carrier A, and the delivery system 300B is run by the carrier B. The user 1 owns the user terminals 401A and 401B. The user 2 owns the user terminal 402A. The user 3 owns the user terminal 403B.

Each of these systems (100, 200, 300A, and 300B) and user terminals (401A, 401B, 402A, and 403B) are operated by controlling, through programs, a computer (any one of a central processing unit, processor, and data processing unit) mounted on each of them. Next, a description will be given of the functions of each system and terminal.

The ID management system 100 includes a delivery request ID supply section 101, a delivery request ID information storage section 102, a deliveree user ID resolution section 103, an allocated-user information storage section 104, and an ID federation information storage section 105.

The delivery request ID supply section 101 has a function of referring to the delivery request ID information storage section 102, generating a delivery request ID that can uniquely identifying a delivery request, and storing the delivery request ID in the delivery request ID information storage section 102. The delivery request ID supply section 101 also has a function of returning the generated delivery request ID to a delivery request ID acquisition section 202.

The deliveree user ID resolution section 103 has a function of receiving a delivery request ID and a carrier ID. Moreover, the deliveree user ID resolution section 103 has a function of referring to the ID federation information storage section 105 and acquiring information on a user to whom the carrier identified by the carrier ID can deliver. Further, the deliveree user ID resolution section 103 has a function of referring to the allocated-user information storage section 104 and acquiring information on a user to whom a delivery is already allocated with respect to the delivery request identified by the delivery request ID. Furthermore, the deliveree user ID resolution section 103 has a function of resolving a user to whom the carrier can deliver and a delivery has not been allocated and returning a list of user IDs of such users to ary one of deliveree user ID acquisition sections 302A and 302B.

The allocated-user information storage section 104 has a function of storing information on a user to whom a delivery is already allocated with respect to a delivery request and also storing a generated delivery request ID. Specifically, the allocated-user information storage section 104 has a function of storing a delivery request ID and a delivery-allocated ID management provider user ID, associating them with each other. FIGS. 2 and 3 show, for a description of operation which will be given later, examples of delivery request IDs stored in the delivery request ID storage section 104.

The ID federation information storage section 105 has a function of storing an ID management provider user ID, a carrier ID, and a carrier user ID, linking them with each other. FIG. 4 shows an example of ID federation information in the ID federation information storage section 105. The ID federation information shown in FIG. 4 is information on linkages between user IDs on the ID management provider and carriers A and B.

The service providing system 200 includes a message contents reception section 201, the delivery request ID acquisition section 202, and a delivery request section 203. The message contents reception section 201 has a function of receiving message contents from the service providing system manager terminal 250 and transmitting the message contents to the delivery request ID acquisition section 202.

The delivery request ID acquisition section 202 has a function of receiving message contents from the message contents reception section 201. Moreover, the delivery request ID acquisition section 202 has a function of requesting the delivery request ID supply section 101 to issue a delivery request ID, which will be described later, and receiving the delivery request ID from the delivery request ID supply section 101. Further, the delivery request ID acquisition section 202 has a function of transmitting the message contents and delivery request ID to the delivery request section 203.

The delivery request section 203 has a function of receiving message contents and a delivery request ID from the delivery request ID acquisition section 202 and transmitting the message contents and delivery request ID to a delivery reception section 301 of the delivery system 300A.

The delivery systems 300A and 300B have the delivery reception sections 301A and 301B, the deliveree user ID acquisition sections 302A and 302B, delivery sections 303A and 303B, and delivery reference transfer sections 304A and 304B, respectively. Note that the delivery reference transfer section 304B is not required when transfer operation, which will be described later, is not performed. FIG. 1 shows as an example that a transfer is made from the delivery system 300A run by the carrier A to the delivery system 300B run by the carrier B. If a further transfer is made from the delivery system 300B to a delivery system runby another carrier, transmission operation is performed by the delivery reference transfer section 304B. Since the delivery systems 300A and 300B have the same basic functional configurations, a description will be given below collectively.

The delivery reception sections 301A and 3018 each have a function of receiving a delivery request ID and message contents and transmitting the delivery request ID and message contents to the deliveree user ID acquisition sections 302A and 302B, respectively. The deliveree user ID acquisition sections 302A and 302B each have a function of receiving a delivery request ID and message contents, transmitting the delivery request ID and its own preset carrier ID to the deliveree user ID resolution section 103 of the ID management system 100, and acquiring a list of carrier user IDs of chose users to whom a delivery should be made. The deliveree user ID acquisition sections 302A and 302B also have a function of transmitting the list of carrier user IDs thus acquired, message contents, and delivery request ID to the delivery sections 303A and 3038, respectively.

The delivery sections 303A and 303B each have a function of receiving a list of carrier user IDs, message contents, and a delivery request ID and sending the message contents to the user terminals identified by the carrier user IDs. The delivery sections 303A and 303B also have a function of transmitting the delivery request ID, message contents, and a carrier ID running a delivery system to be a transfer destination to the delivery reference transfer sections 304A and 304B, respectively.

The delivery reference transfer sections 304A and 304B each receive a delivery request ID, message contents, and a transfer-destination carrier ID and transmit the delivery request ID and message contents to the delivery reception section 301B of the delivery system run by the transfer-destination carrier. Note that the delivery reference transfer section 304B does not perform transmission operation in the present exemplary embodiment.

The user terminals 401A and 401B owned by the user 1, the user terminal 402A owned by the user 2 and the user terminal 403B owned by the user 3 each have a function of receiving message contents from any one of the delivery sections 303A and 303B through a network.

### 1.2) Operation

Next, operation according to the present exemplary embodiment will be described. To avoid complicating a description of the operation, assumptions are made as follows.

In the present exemplary embodiment, the delivery request ID information storage section 102 keeps "D001" as delivery request ID information as shown in FIG. 2. The delivery request ID information of FIG. 2 is updated to delivery request ID information as shown in FIG. 3 through a delivery request ID generation process, which will be described later.

The ID federation information storage section 105 keeps ID federation information as shown in FIG. 4. Specifically, referring to FIG. 4, an ID management provider user ID "user1@idp", a carrier user ID "user1@a.com" on the carrier A, and a carrier user ID "user1@b.com on the carrier B are ID-federated with respect to the user 1. Moreover, an ID management provider user ID "user2@idp" and a carrier user ID "user2@a.com" on the carrier A are ID-federated with respect to the user 2, and an ID management provider user ID "user3@idp" and a carrier user ID "user3@b.com" on the carrier B are ID-federated with respect to the user 3. Accordingly, once an ID management provider user ID is given, a carrier or carriers used by the user in question can be found, and once a carrier ID is given, a carrier user ID or carrier user IDs managed by that carrier can be specified.

The allocated-user information storage section 104 keeps, as allocated-user information, information in which ID management provider user IDs ("user1@idp", "user2@idp", and "user3@idp") are associated with the delivery request ID "D001" as shown in FIG. 5. The allocated-user information of FIG. 5 is updated to allocated-user information as shown in FIG. 6 through an ID management provider user ID allocation process, which will be described later.

Next, operation according to the present exemplary embodiment will be described with reference to the operation sequence diagram of FIG. 7. In addition, operation of the deliveree user ID resolution section 103 will be described in detail with reference to FIGS. 8 and 9.

The service providing system manager terminal 250 transmits message contents entered by a system manager in the service provider to the message contents reception section 201 of the service providing system 200 (FIG. 7: Step S1-S-1). The service providing system 200 transfers the message contents received at the message contents reception section 201 to the delivery request ID acquisition section 202.

The delivery request ID acquisition section 202, upon receiving the message contents as an input, requests the delivery request ID supply section 101 of the ID management system 100 to issue a delivery request ID (FIG. 7: Step S1-S-2). The delivery request ID supply section 101, upon receiving the request to issue a delivery request ID, refers to the delivery request ID information storage section 102, generates new delivery request ID information that is different from delivery request ID information already stored in the delivery request ID information storage section 102, and stores the generated delivery request ID information in the delivery request ID information storage section 102 (FIG. 7: Step S1-S-3). Here, since the delivery request ID information "D001" is already stored in the delivery request ID information storage section 102 as shown in FIG. 2, the delivery request ID supply section 101 generates new delivery request ID information "D002" and stores it in the delivery request ID information storage section 102. As a result, two pieces of delivery request ID information, "D001" and "D002", are stored in the delivery request ID information storage section 102 as shown in FIG. 3.

Subsequently, the delivery request ID supply section 101 returns the generated delivery request ID information "D002" to the delivery request ID acquisition section 202 (FIG. 7: Step S1-S-4). The delivery request ID acquisition section 202, upon acquiring the delivery request ID information from the delivery request ID supply section 101, passes the delivery request ID information acquired and the message contents input from the message contents reception section 201 to the delivery request section 203. The delivery request section 203, upon receiving the delivery request ID information and message contents from the delivery request ID acquisition section 202, transmits the delivery request ID information and message contents to the delivery reception section 301A of the delivery system 300A and requests to deliver the message (FIG. 7: Step S1-S-5).

Hereinafter, for convenience, a processing step related to the delivery system 300A (carrier A) and a processing step related to the delivery system 300B (carrier B) will be denoted by "Step S1-A-n" and "Step S1-B-n" (n = 1, 2, ...), respectively, and operation of the ID management system 100 and delivery systems 300A and 300B will be described in detail with reference to FIGS. 8 and 9.

The delivery reception section 301A of the delivery system 300A, upon receiving the delivery request ID information and message contents from the delivery request section 203 (Step S1-A-1), passes the delivery request ID information and message contents to the deliveree user ID acquisition section 302A (Step S1-A-2). The deliveree user ID acquisition section 302A, upon receiving the delivery request ID information and message contents, passes the delivery request ID information and its own preset carrier ID to the deliveree user ID resolution section 103 of the ID management system 100 and requests user ID resolution (FIG. 7: Step S1-S-6; Step S1-A-3). Here, the deliveree user ID acquisition section 302A of the delivery system 300A passes the carrier ID "ccID-A" of the carrier A running the delivery system 300A to the deliveree user ID resolution section 103. Thus, the deliveree user ID resolution section 103 acquires the delivery request ID information and carrier ID (FIG. 8: Step S1-F2-1; Step S1-A-4).

Referring to FIGS. 8 and 9, the deliveree user ID resolution section 103, upon receiving the request for user ID resolution from the deliveree user ID acquisition section 302A, generates a blank deliveree candidate list 501 for storing a return value for the request (FIG. 8: Step S1-F2-2) and resolves a list 502 of ID management provider user IDs of delivery-target users (FIG. 8: Step S1-F2-3; Step S1-A-5) Hereinafter, this list 502 will be referred to as "userIDidp list". Here, since delivery targets are the user terminals 401A, 401B, 402A and 402B of all users (i.e., users 1, 2, and 3), resolved is the userIDidp list 502 including the ID management provider user IDs of these three users, {"user1@idp", "user2@idp", "user3@idp"}.

However, delivery targets do not necessarily have to be the terminals of all users. For example, if the ID management system 100 manages location information on user terminals and user information such as age and gender, it is also possible to limit delivery targets to those user terminals according to the location information, age, and/or gender. Specifically it is assumed that the ID management system 100 has "Tamachi" as location information on the user terminal 401A, "Shinagawa" as location information on the user terminal 402A, and "Tamachi" as location information on the user terminal 403A, for example. In this case, if delivery targets are those user terminals whose present location is "Tamachi", delivery targets are limited to the user terminals 401A and 403B, and the userIDidp list 502 is {"user1@idp", "user3@idp"}.

Next, the deliveree user ID resolution section 103 performs processing of Steps S1-F2-5, S1-F2-6, and S1-F2-7 on each of "user1@idp", "user2@idp", and "user3@idp" in the userIDidp list 502 (FIG. 8: Step S1-F2-4).

First, the deliveree user ID resolution section 103 refers to the ID federation information storage section 105 and checks whether or not an ID management provider user ID (userIDidp) sequentially selected from the userIDidp list 502 is ID-federated with the carrier ID of the requester of user ID resolution (FIGS. 8 and 9: Step S1-F2-5). When the ID management provider user ID (userIDidp) can be acquired as ID-federated with a carrier user ID on the carrier in question (Step S1-F2-5: YES), the carrier in question can deliver. Therefore, the deliveree user ID resolution section 103 refers to the allocated-user information storage section 104 and checks whether or not the acquired ID management provider user ID (userIDidp) is associated with the delivery request ID (FIGS. 8 and 9: Step S1-F2-6). On the other hand, when the userIDidp cannot be acquired in Step S1-F2-5 (Step S1-F2-5: NO), the carrier cannot deliver. Therefore, skipping the subsequent Steps S1-F2-6 and S1-F2-7, the deliveree user ID resolution section 103 repeats the above-described Steps S1-F2-5, S1-F2-6, and S1-F2-7 to the remaining ID management provider user IDs (FIG. 8: Step S1-F2-4).

To be more specific with reference to FIG. 9, the userIDidp list 502 includes "userl@idp", "u,ser2@zdp", and "user3@idp". It is found by referring to the ID federation information storage section 105 in Step S1-F2-5 that those ID management provider user IDs which are ID-federated with the carrier A identified by the requester's carrier ID"ccID-A" are "user1@idp" and "user2@idp" in the userIDidp list 502. Therefore, when an ID management provider user ID is "user1@idp" or "user2@idp" (Step S1-F2-5: YES), the next processing of Step S1-F2-6 is performed. Since the remaining ID management provider user ID "user3@idp" is not ID-federated with the carrier A (Step S1-F2-5: NO), Steps S1-F2-6 and S1-F2-7 are skipped. When the processing is finished for every delivery-target ID management provider user ID, the process exits the repetitive processing of Step S1-F2-4.

In the processing of Step S1-F2-6, when it is found by referring to the allocated-user information storage section 104 shown in FIG. 2 that the ID management provider user ID under processing is not associated with the delivery request ID (Step S1-F2-6: NO), the deliveree user ID resolution section 103 needs to have a delivery be made because the user in question has not been allocated the delivery request. Therefore, the deliveree user ID resolution section 103 goes on to perform the processing of Step S1-F2-7. On the other hand, when the ID management provider user ID under processing is associated with the delivery request ID (Step S1-F2-6: YES), the deliveree user ID resolution section 103 does not need to have a delivery be made because the user in question is already allocated the delivery request. Therefore, the deliveree user ID resolution section 103 selects a next ID management provider user ID and performs the repetitive processing of Step S1-F2-4.

That is, since it is found upon referring to the allocated-user information storage section 104 shown in FIG. 5 that the ID management provider user IDs "user1@idp" and "user2@idp" subject to the processing of Step S1-F2-6 are not associated with the delivery request ID (Step S1-F2-6: NO) , there is no delivery-allocated user ID, and the processing of Step S1-F2-7 is subsequently performed on the ID management provider user IDs "user1@idp" and "user2@idp" (Step S1-A-7).

In the processing of Step S1-F2-7 in FIG. 8, the deliveree user ID resolution section 103 sequentially adds to the blank deliveree candidate list 501 a user (ID management provider user ID) to whom a delivery can be made but the delivery request has not been allocated. Here, the processing (add) of Step S1-F2-7 is performed on the ID management provider user IDs "user1@idp" and "user2@idp" as shown in FIG. 9 to obtain a deliveree candidate list 503 to which "user1@idp" and "user2@idp" have been added.

Next, the deliveree user ID resolution section 103 registers the ID management provider user IDs included in the deliveree candidate list 503 generated in Step S1-F2-7 with the allocated-user information storage section 104 (FIGS. 8 and 9: Step S1-F2-8; Step S1-A-8). Here, the added user IDs "user1@idp" and "user2@idp" are stored in the allocated-user information storage section 104, associated with the delivery request ID "D002". As a result, the storage contents of the allocated-user information storage section 104 are updated as shown in FIG. 6.

Next, the deliveree user ID resolution section 103 refers to the ID federation information storage section 105, translates each ID management provider user ID included in the deliveree candidate list 503 into a carrier user ID (FIGS. 8 and 9: Steps S1-F2-9 and S1-F2-10), and transmits a translated deliveree candidate list 504 to the deliveree user ID acquisition section 302A (FIG. 8: S1-F2-11; FIG. 7: Step S1-S-8; Step S1-A-9). Here, the deliveree user ID resolution section 103 translates the ID management provider user IDs "user1@idp" and "user2@idp" into the carrier user IDs "user1@a.com" and "user2@a.com" on the carrier A, respectively, and transmits the translated deliveree candidate list 504 to the deliveree user ID acquisition section 302A of the delivery system 300A.

The deliveree user ID acquisition section 302A receives the deliveree candidate list 504, {"user1@a.com", "user2@a.com"}, from the deliveree user ID resolution section 103 and passes this list of user IDs, the message contents, and delivery request ID to the delivery section 303A (Step S1-A-10).

The delivery section 303A, upon receiving the deliveree candidate list 504, message contents, and delivery request ID from the deliveree user ID acquisition section 302A, delivers the message contents to the user terminal identified by each user ID included in the deliveree candidate list 504 (FIG. 7: Step S1-S-9; Step S1-A-11). Here, the delivery section 303A delivers the message to the user terminals 401A and 402A in accordance with the deliveree candidate list 504, {"user1@a.com", "user2@a.com"}.

Subsequently, the delivery section 303A passes the delivery request ID and message contents to the delivery reference transfer section 304A (Step S1-A-12), and the delivery reference transfer section 304A transmits the delivery request ID and message contents to the delivery reception section of a carrier preset as a transfer destination. Here, it is assumed that "ccID-B" is designated as a transfer-destination carrier ID. Therefore, the delivery reference transfer section 304A transmits the delivery request ID "D002" and message contents to the delivery reception section 301B of the delivery system 300B (FIG. 7: Step S1-S-10; Step S1-A-13). Thus, the processing in the delivery system 300A is completed.

Subsequently, processing in the delivery system 300B will be described. The delivery reception section 301B of the delivery system 300B, upon receiving the delivery request ID "D002" and message contents from the delivery reference transfer section 304A (Step S1-B-1) transfers them to the deliveree user ID acquisition section 302B (Step S1-B-2). The deliveree user ID acquisition section 302B, upon receiving the delivery request ID "D002" and message contents, passes the delivery request ID "D002" and the carrier ID of its own delivery system to the deliveree user ID resolution section 103 (FIG. 7: Step S1-S-11; Step S1-B-3). The carrier ID of its own delivery system passed on here is the carrier ID "ccID-B" of the carrier B running the delivery system 300B.

Subsequently, the deliveree user ID resolution section 103 performs the operation of Step S1-F2-2 and the subsequent steps in FIG. 8 as described above. Specifically the deliverees user ID resolution section 103, upon receiving a request for user ID resolution from the deliveree user ID acquisition section 302B, generates a blank deliveree candidate list for storing a return value for the request (FIG. 8: Step S1-F2-2) and resolves a userIDidp list of delivery-target users (FIG. 8: Step S1-F2-3; Step S1-B-4). Subsequently, the deliveree user ID resolution section 103 refers to the ID federation information storage section 105 and thereby acquires the ID management provider user IDs "user1@idp" and "user3@idp", which are, among those in the userIDidp list, federated with the carrier B identified by the carrier ID "ccID-B" (FIG. 8: Step S1-F2-5; Step S1-B-5).

Next, the deliveree user ID resolution section 103 refers to the allocated-user information storage section 104 updated. as shown in FIG. 6, determines that the ID management provider user IDs "user1@idp" and "user2@idp" associated with the delivery request ID "D002" are delivery-allocated users, and detects that "user3@idp" is a user obtained by excluding the delivery-allocated users "user1@idp" and "user2@idp" from the userIDidp list {"user1@idp", "user3@dip"}, that is, a user to whom the carrier can deliver and a delivery has not been allocated (FIG. 8: Step S1-F2-6, FIG. 7: Step S1-S-12; Step S1-B-6).

Next, the deliveree user ID resolution section 103 generates a deliveree candidate list {"user3@idp"} of a user to whom the carrier can deliver and a delivery has not been allocated (FIG. 8: Step S1-F2-7) and stores the user, associating the user with the delivery request ID "D002" (FIG. 8: Step S1-F2-8; Step S1-B-7). Subsequently, the deliveree user ID resolution section 103 translates the deliveree candidate list {"user3@idp"} into the user ID "user3@b.com" on the carrier B identified by "ccID-B" and transmits the translated deliveree candidate list to the deliveree user ID acquisition section 302B (FIG. 8: Steps S1-F2-9 to S1-F2-11, FIG. 7: Step S1-S-13; Step S1-B-8).

The deliveree user ID acquisition section 302B, upon receiving the deliveree candidate list {"user3@b.com"} from the deliveree user ID resolution section 103 (Step S1-B-9), passes the received deliveree candidate list and message contents to the delivery section 303D (Step S1-B-10). The delivery section 3038 delivers the message contents to the user terminal registered in the deliveree candidate list {"user3@b.com"} (FIG. 7: Step S1-S-14; Step S1-B-11). Here, the delivery section 303B delivers the message to the user terminal 403B of the user 3. Thus, the processing in the delivery system 300B is completed.

### 1.3) Effects

Next, effects of the first exemplary embodiment of the present invention will be described.

A first effect of the present exemplary embodiment is that a user is prevented from receiving the same message multiple times even if the user subscribes to a plurality of carriers (here, in the case where the user 1 subscribes to each of the carriers A and B). The reason is that a user ID of a delivery-allocated user is stored with respect to a delivery request ID so that a delivery will not be made to the delivery-allocated user.

Moreover, a second effect of the present exemplary embodiment is that if a carrier cannot deliver a message to some of users to whom a service provider desires to deliver the message because they do not subscribe to the carrier, the carrier can accomplish delivery of the message by requesting another carrier to deliver the message, in which case information that the carrier does not want the requested another carrier to know is not disclosed. Further, there is also another effect that a transfer-source carrier can freely choose a transfer-destination carrier.

The reason is that the ID management system 100 issues a delivery request ID as an identifier for uniquely identifying a message delivery request from a service provider, a carrier only passes the delivery request ID and a message to a transfer-destination carrier, and the transfer-destination carrier acquires a user ID of a user to whom the transfer-destination carrier can deliver based on the delivery request ID and its own carrier ID, thereby delivering the message.

Note that although carrier user IDs are different from ID management provider user IDs in the ID federation information stored in the ID federation information storage section 105 in the present exemplary embodiment as shown in FIG. 4, the same values may be used for carrier user IDs and ID management provider user IDs, as shown in FIG. 25. Moreover, if carrier user IDs and ID management provider user IDs are the same values, the ID federation information storage section 105 may store an ID management provider user ID and an ID-federated carrier, federating them with each other, as shown in FIG. 26.

### 2. Second exemplary embodiment

Next, a second exemplary embodiment of the present invention will be described in detail with reference to the drawings.

### 2.1) Configuration

In FIG. 10, the same components as those in FIG. 1 are denoted by the same reference signs as in FIG. 1, and a description thereof will be omitted. A message delivery system according to the present exemplary embodiment is assumed to include an ID management system 120, the service providing system 200, the service providing system manager terminal 250, delivery systems 320A and 320B, the user terminals 401A, 401B, 402A, and 403B, and a network connecting these systems and terminals so that they can communicate with each other.

Compared with the first exemplary embodiment shown in FIG. 1, the present exemplary embodiment is different in the configurations of the ID management system 120 and delivery systems 320A and 320B. Specifically, the configuration of the ID management system 120 is that of the ID management system 100 in FIG. 1 to which a delivery reference list transmission section 106 is added. The configurations of the delivery systems 320A and 320B are those of the delivery systems 300A and 300B in FIG. 1, respectively, to which delivery reference transfer list determination sections 305A and 305B are added, respectively. Incidentally, the delivery system 320A is run by the carrier A, and the delivery system 320B is run by the carrier B.

The delivery reference transfer list determination sections 305A and 305B each have a function of receiving a delivery request ID from the delivery reference transfer sections 304A and 304B, respectively. Moreover, the delivery reference transfer list determination sections 305A and 305B each have a function of transmitting the received delivery request ID and the carrier ID of the carrier running the delivery system in question to the delivery reference list transmission section 106 and receiving a list including a candidate or candidates for a delivery-destination carrier. Further, the delivery reference transfer list determination sections 305A and 305B each have a function of randomly selecting a carrier ID from the received list of carrier IDs and transmitting the selected carrier ID and message contents to the delivery reference transfer sections 304A and 304B, respectively.

The delivery reference list transmission section 106 has a function of receiving a delivery request ID and a carrier ID from the delivery reference transfer list determination section 305A or 305B. Moreover, the delivery reference list transmission section 106 has a function of referring to the allocated-user information storage section 104, selecting a user who has not been allocated a delivery, further referring to the ID federation information storage section 105, and retrieving a carrier that is ID-federated with the ID management provider user ID of the user who has not been allocated a delivery. Further, the delivery reference list transmission section 106 has a function of returning a list of the carrier IDs of such carriers retrieved to the delivery reference transfer list determination section 305A or 305B.

### 2.2) Operation

Next, operation according to the present exemplary embodiment will be described. Referring to FIG. 11, Steps S2-S-1 to S2-S-4 are processing characterizing the present exemplary embodiment. Since the other processing steps are basically similar to those of the first exemplary embodiment shown in FIG. 7, they are denoted by the same reference signs as in FIG. 7, and a description thereof will be omitted. A detailed description will be given below with reference to FIGS. 12 and 13. Hereinafter, a processing step related to the delivery system 320A (carrier A) in the present exemplary embodiment will be denoted by "Step S2-A-n" (n = 1, 2, ...).

First, the delivery reference transfer section 304A of the delivery system 320A, upon receiving a delivery request ID and message contents from the delivery section 303A, passes the delivery request ID to the delivery reference transfer list determination section 305A (Step S2-A-1). Thereby, the delivery reference transfer list determination section 305A transmits the received delivery request ID and the carrier ID of the carrier running this delivery system to the delivery reference list transmission section 106 (FIG. 11: Step S2-S-1; Step S2-A-2). The carrier ID transmitted here is "ccID-A" of the carrier A, which runs the delivery system 320A.

Next, the delivery reference list transmission section 106, upon receiving the delivery request ID and requester's carrier ID (here, "ccID-A") from the delivery reference transfer list determination section 305A (FIG. 12: Step S2-F2-1) generates a blank delivery-capable carrier set 601 (hereinafter, referred to as "delivery-capable ccID set") for storing a return value resolved by the deliveree user ID resolution section 103 (FIG. 12: Step S2-F2-2; Step S2-A-3). Subsequently the delivery reference list transmission section 106 resolve a userIDidp list 602 as in the first exemplary embodiment (FIG. 12: Step S2-F2-3; Step S2-A-4). Here, since all users are delivery targets, the userIDidp list 602 is {"user1@idp", "user2@idp", "user3@idp"}.

Next, the delivery reference list transmission section 106 sequentially performs processing of Steps S2-F2-5, S2-F2-6, and S2-F2-7 on each of "user1@idp", "user2@idp", and "user3@idp" in the userIDidp list 602 (FIG. 12: Step S2-F2-4).

Specifically, the delivery reference list transmission section 106 refers to the allocated-user information storage section 104 and checks whether or not a userIDidp sequentially selected from the userIDidp list 602 is associated with the delivery request ID (FIGS. 12 and 13: Step S2-F2-5; Step S2-A-5). If the selected userIDidp is not associated with the delivery request ID (Step S2-F2-5: NO), the delivery reference list transmission section 106 goes on to the processing of Step S2-F2-6 because the user has not been allocated the delivery request and a delivery needs to be made. On the other hand, if the selected userIDidp is associated with the delivery request ID (Step S2-F2-5: YES), since the user is already allocated the delivery request and no delivery needs to be made, the delivery reference list transmission section 106 performs the repetitive processing of Step S2-F2-4 on a next ID management provider user ID.

Here, since a delivery is already allocated to the user terminals 401A and 401B of the user 1 and to the user terminal 402A of the user 2, "user3@idp" is an ID management provider user ID to which a delivery has not been allocated, as shown in FIG. 13.

Next, the delivery reference list transmission section 106 refers to the ID federation information storage section 105, acquires a carrier ID that is ID-federated with the ID management provider user ID (userIDidp) that is not associated with the delivery request ID (FIGS. 12 and 13: Step S2-F2-6), and adds the carrier ID to a delivery-capable ccID set 603 (FIGS. 12 and 13: Step S2-F2-7; Step S2-A-6). Referring to FIG. 13, since a carrier ID federated with "user3@idp" is "ccID-B" here, the delivery-capable ccID set 603 is (ccID-B). Thus, the delivery-capable ccID set 603 is generated as a delivery reference list (FIG. 11: Step S2-S-2).

Next, the delivery reference list transmission section 106 returns the delivery-capable ccID set 603 to the delivery reference transfer list determination section 305A (FIG. 11: Step S2-S-3; FIG. 12: Step S2-F2-8; Step S2-A-7). Returned here is {ccID-B}. Thereby, the delivery reference transfer list determination section 305A receives the delivery-capable ccID set 603 (here, {ccID-B}), randomly selects a carrier ID from the delivery-capable ccID set 603, and transmits the selected carrier ID, delivery request ID, and message contents to the delivery reference transfer section 304A (FIG. 11: Step S2-S-4; Step S2-A-8).

Note that since operation, related to the delivery system 320B is basically similar to that of the delivery system 320A as described above, a description thereof will be omitted.

### 2.3) Effects

Next, effects of the present exemplary embodiment will be described. In the present exemplary embodiment, the delivery reference list transmission section 106 of the ID management system 120 has a function of generating, as candidates for a transfer-destination carrier, a list of carriers that are ID-federated with an ID management provider user ID that is not associated with a delivery request ID and returning that list of candidates to the ID delivery system 320A or 320B. Therefore, according to the present exemplary embodiment, when the delivery system 320A or 320B transfers a delivery request to another carrier, the delivery system 320A or 320B can choose a transfer-destination carrier by using as reference the acquired list of carrier IDs when selecting a transfer-destination carrier.

Note that although a carrier ID is randomly selected from a list of carrier IDs in the present exemplary embodiment, a carrier at the top of the list may be selected, or a carrier may be selected in descending order, rather than selected at random.

### 3. Third exemplary embodiment

Next, a third exemplary embodiment of the present invention will be described with reference to the drawings. In the above-described second exemplary embodiment, the delivery-capable ccID set 603 including a transfer-destination carrier ID is returned to a delivery system as a delivery reference list. It is possible to add selection criterion information to each carrier ID in this delivery-capable ccID set 603. Hereinafter, in the third exemplary embodiment of the present invention, the number of potential deliverees is added as the selection criterion information.

### 3.1) Configuration

In a message delivery system according to the third exemplary embodiment shown in FIG. 14, the same components as those of the second exemplary embodiment shown in FIG. 10 are denoted by the same reference signs as in FIG. 10, and a description thereof will be omitted. The message delivery system according to the present exemplary embodiment is assumed to include an ID management system 130, the service providing system 200, the service providing system manager terminal 250, the delivery systems 320A and 320B, the user terminals 401A, 401B, 402A, and 403B, and a network connecting these systems and terminals so that they can communicate with each other.

Compared with the second exemplary embodiment shown in FIG. 10, the present exemplary embodiment is different in the configuration of the ID management system 130. Specifically, the configuration of the ID management system 130 is that of the ID management system 120 in FIG. 10 to which a number-of-potential-deliverees calculation section 107 is added. The number-of-potential-deliverees calculation section 107 has a function of receiving a list of carrier IDs from the delivery reference list transmission section 106 and calculating and returning the number of people who will be allocated a delivery when a transfer is made to each of these carriers.

### 3.2) Operation

Next, operation according to the present exemplary embodiment will be described. Referring to FIG. 15, Steps S3-S-1 to S3-S-3 are processing characterizing the present exemplary embodiment. Since the other processing steps are basically similar to those of the first and second exemplary embodiments shown in FIGS. 7 and 11 respectively, they are denoted by the same reference signs as in FIGS. 7 and 11, and a description thereof will be omitted. A detailed description will be given below with reference to FIGS . 14 and 15. Hereinafter, a processing step related to the delivery system 320A (carrier A) in the present exemplary embodiment will be denoted by "Step S3-A-n" (n = 1, 2, ...).

First, referring to Fig. 15, the delivery reference list transmission section 106, upon generating a delivery-capable ccID set (Step S2-S-2), transmits the delivery-capable ccID set and a delivery request ID to the number-of-potential-deliverees calculation section 107. Here, it is assumed that the delivery-capable ccID set 603, {ccID-B}, and the delivery request ID "D002" are transmitted (Step S3-A-1).

Subsequently, the number-of-potential-deliverees calculation section 107 refers to the allocated-user information storage section 104 and counts the number of ID management provider user IDs of those users who have not been allocated a delivery with respect to the delivery request ID (FIG. 15: Step S3-S-1; Step S3-A-2). Here, since the user 3 is a user who has not been allocated a delivery with respect to the delivery request ID "D002", the number-of-potential-deliverees calculation section 107 counts his/her ID management provider user ID ("users

Subsequently the number-of-potential-deliverees calculation section 107 refers to the ID federation information storage section 105 and, for each of the carrier IDs, increases the number of potential deliverees to whom the carrier ID in question can deliver if the carrier ID can deliver to the users who have not been allocated a delivery (FIG. 15: Step S3-S-1; Step S3-A-3). Specifically, the number-of-potential-deliverees calculation section 107 checks whether or not each ID management provider user ID is ID-federated with any of the carriers identified by the carrier IDs.

Here, it is checked whether or not the ID management provider user ID "user3@idp" is ID-federated with the carrier ID "cciD-B", and it is found that "user3@idp" is ID-federated with "ccID-B". That is, "ccID-B" can deliver to "user3@idp". Accordingly, the number of potential deliverees to whom "ccID-B" can deliver is increased by one to obtain, as a result, a number-of-potential-deliverees list ("ccID-B", 1), including a set of a carrier, which is "ccID-B", and the number of potential deliverees, which is 1. Thus, the number-of-potential-deliverees list, which includes a carrier ID that can deliver to a user who has not been allocated a delivery and the number of such users to whom the carrier can deliver, is generated.

Lastly, the number-of-potential-deliverees calculation section 107 passes the number-of-potential-deliverees list generated for each carrier to the delivery reference list transmission section 106 (Step S3-A-4). Here, ("ccID-B", 1) is transmitted.

The delivery reference list transmission section 106 transmits to the delivery reference transfer list determination section 305A the number-of-potential-deliverees lists each indicating a delivery-capable carrier ID and the number of potential deliverees to whom the corresponding carrier can deliver (FIG. 15: Step S3-S-2; Step S3-A-5). Here, ("ccIB-B", 1) is transmitted.

The delivery reference transfer list determination section 305A receives the above-described number-of-potential-deliverees lists, each including a set of a delivery-capable carrier ID and the number of potential deliverees, from the delivery reference list transmission section 106 as a list of delivery reference transfer destinations and selects a carrier ID having the largest number of potential deliverees (FIG. 15: Step S3-S-3; Step S3-A-6). The delivery reference transfer list determination section 305A then processes the selected carrier as a transfer-destination carrier (FIG. 15: Step S1-S-10; Step S3-A-7).

Note that although a carrier ID having the largest number of potential deliverees is selected in the present exemplary embodiment, it is also possible to select, conversely, a carrier ID having the smallest number of potential deliverees. Additionally, since operation related to the delivery system 320B is basically similar to that of the delivery system 320A as described above, a description thereof will be omitted.

### 3.3) Effects

Next, effects of the present exemplary embodiment will be described. In the present exemplary embodiment, the number-of-potential-deliverees calculation section 107 of the ID management system 130 has a function of returning the number of potential deliverees. Therefore, according to the present exemplary embodiment, when a delivery system selects a transfer-destination carrier, it is possible to select a transfer-destination carrier depending on the number of potential deliveree.

### 4. Fourth exemplary embodiment

Next, a fourth exemplary embodiment of the present invention will be described with reference to the drawings. In the fourth exemplary embodiment of the present invention, a user sharing ratio is added as selection criterion information to each carrier ID in the delivery-capable ccID set 603.

### 4.1) Configuration

In a massage delivery system according to the fourth exemplary embodiment shown in FIG. 16, the same components as those of the second exemplary embodiment shown in FIG. 10 are denoted by the same reference signs as in FIG. 10, and a description thereof will be omitted. The message delivery system according to the present exemplary embodiment is assumed to include an ID management system 140, the service providing system 200, the service providing system manager terminal 250, the delivery systems 320A and 320B, the user terminals 401A, 401B, 402A, and 403B, and a network connecting these systems and terminals so that they can communicate with each other.

Compared with the second exemplary embodiment shown in FIG. 10, the present exemplary embodiment is different in the configuration of the ID management system 140. Specifically, the configuration of the ID management system 140 is that of the ID management system 120 shown in FIG. 10 to which a user sharing ratio calculation section 108 is added. The user sharing ratio calculation section 108 has a function of receiving a list including a transfer-source carrier ID and a transfer-destination-candidate carrier ID from the delivery reference list transmission section 106 and calculating what proportion of users subscribe to both of the transfer-source carrier and transfer-destination carrier.

### 4.2) Operation

Next, operation according to the present exemplary embodiment will be described. Referring to FIG. 17, Steps S4-S-1 to S4-S-3 are processing characterizing the present exemplary embodiment. Since the other processing steps are basically similar to those of the first and second exemplary embodiments shown in FIGS. 7 and 11 respectively, they are denoted by the same reference signs as in FIGS. 7 and 11, and a description thereof will be omitted. A detailed description will be given below with reference to FIGS. 16 and 17. Hereinafter, a processing step related to the delivery system 320A (carrier A) in the present exemplary embodiment will be denoted by "Step S4-A-n" (n = 1, 2, ...).

First, referring to FIG. 17, the delivery reference list transmission section 106, upon generating a delivery-capable ccID set (Step S2-S-2), transmits the delivery-capable ccID set and a carrier ID that is the source of delivery reference to the user sharing ratio calculation section 108 (Step S4-A-1). Here, a transfer-source carrier ID is "ccID-A", and a transfer-destination carrier ID is "ccID-B".

The user sharing ratio calculation section 108, upon receiving the transfer-source carrier ID and transfer-destination delivery-capable ccID set (Step S4-A-2), performs following processing on each carrier ID included in the delivery-capable ccID set (Step S4-A-3).

First, the user sharing ratio calculation section 108 acquires an ID management provider user ID ID-federated with a carrier user ID on the transfer source and also acquires an ID management provider user ID ID-federated with a carrier user ID on the transfer destination. Hereinafter, a set of ID management provider user IDs ID-federated with carrier user IDs on the transfer source will be referred to as "transfer-source carrier user set", and a set of ID management provider user IDs ID-federated with carrier user IDs on the transfer destination will be referred to as "transfer-destination carrier user set".

The user sharing ratio calculation section 108 calculates the intersection of the transfer-source carrier user set and transfer-destination carrier user set (see FIG. 18). Hereinafter, this intersection will be referred to as "shared user set". Subsequently, the user sharing ratio calculation section 108 calculates, as the "user sharing ratio", the ratio of the number of users in the shared user set to the number of users in the transfer-destination carrier user set (the number of users in the shared user set / the number of users in the transfer-destination carrier user set) . Here, the transfer-source carrier user set includes those users subscribing to the carrier A and is therefore {"user1@idp", user2@idp"}. The transfer-destination carrier user set includes those users subscribing to the carrier B and is therefore {"user1@idp", "user3@idp"}. Accordingly, the shared user set is {"user1@idp"}, and the user sharing ratio between the transfer-destination carrier and transfer-source carrier is 0.5. In this manner, the user sharing ratio is calculated (FIG. 17: Step S4-S-1).

The user sharing ratio calculation section 108 transmits a user sharing ratio list with respect to each carrier to the delivery reference list transmission section 106 (Step S4-A-4), and the delivery reference list transmission section 106 transmits the lists to the delivery reference transfer list determination section 305A (FIG. 17: Step S4-S-2; Step S4-A-5). Here, the delivery reference list transmission section 106 transmits a user sharing ratio list ("ccID-B", 0.5). The delivery reference transfer list determination section 305A, upon thus receiving the user sharing ratio list with respect to each carrier, selects a carrier having the lowest user sharing ratio as a transfer-destination carrier (FIG. 17: Step S4-S-3; Step S4-A-6).

### 4.3) Effects

Next, effects of the present exemplary embodiment will be described. In the present exemplary embodiment, the user sharing ratio calculation section 108 of the ID management system 140 has a function of returning the user sharing ratio. For example, considering a case of sending an advertisement message, it is assumed as shown in FIG. 18 that 0.80 is the proportion of the intersection of a circle 701, which schematically shows by area the number of users of the carrier A, and a circle 702, which schematically shows by area the number of users of the carrier B, that is, the user sharing ratio between the carriers A and B. Moreover, it is assumed that 0.20 is the proportion of the intersection of the circle 701 and a circle 703, which schematically shows by area the number of users of the carrier C, that is, the user sharing ratio between the carriers A and C.

Here, if the carriers B and C are transfer-destination-candidate carriers, it can be determined that the carrier having the lower user sharing ratio has the potential for more new customers because more of the subscribers to this carrier are different from the subscribers to the transfer-source carrier. Therefore, the delivery reference transfer list determination section 305A selects the carrier C having the lower user sharing ratio as a transfer-destination carrier.

### 5. Fifth exemplary embodiment

Next, a fifth exemplary embodiment of the present invention will be described with reference to the drawings. In the fifth exemplary embodiment of the present invention, the number of users with effective authentication is added as selection criterion information to each carrier ID in the delivery-capable ccID set 603.

### 5.1) Configuration

In a message delivery system according to the fifth exemplary embodiment shown in FIG. 19, the same components as those of the third exemplary embodiment shown in FIG. 14 are denoted by the same reference signs as in FIG. 14, and a description thereof will be omitted. The message delivery system according to the present exemplary embodiment is assumed to include an ID management system 150, the service providing system 200, the service providing system manager terminal 250, delivery systems 330A and 330B, the user terminals 401A, 401B, 402A, and 403B, and a network connecting these systems and terminals so that they can communicate with each other.

Compared with the third exemplary embodiment shown in FIG. 14, the present exemplary embodiment is different in the configurations of the ID management system 150 and delivery systems 330A and 330B. Specifically, the configuration of the ID management system 150 is that of the ID management system 130 shown in FIG. 14 to which an authentication effectiveness calculation section 109, an authentication history information storage section 110, and an authentication execution section 111 are added. Moreover, the configurations of the delivery systems 330A and 330B are those of the delivery systems 320A and 320B shown in FIG. 14, respectively, to which service providing sections 306A and 306B and user authentication sections 307A and 307B are added, respectively.

The authentication history information storage section 110 has a function of storing information that the authentication execution section 111 performed authentication. For example, the authentication history information storage section 110 stores the ID management provider user ID of an authenticated user and the date and time of authentication, associating them with each other, as shown in FIG. 21. The authentication effectiveness calculation section 109 has a function of, by request from the number-of-potential-deliverees calculation section 107, referring to the authentication history information storage section 110 and determining whether or not a designated user is an authenticated user.

The authentication execution section 111 has a function of receiving a request for authentication from any of the user terminals 401A, 401B, 402A, and 403B, performing authentication on their respective carrier user IDs, and storing the result of authentication in the authentication history information storage section 110. Moreover, the authentication execution section 111 has a function of receiving a request for authentication confirmation from any of the respective user authentication sections 307A and 307B of the delivery systems 330A and 330B and determining whether or not a user identified by a carrier user ID contained in the request for authentication confirmation is an authenticated user. More specifically, based on a carrier, user ID contained in a request for authentication confirmation, the authentication execution section 111 refers to the ID federation information in the ID federation information storage section 105, translates the carrier user ID into an ID management provider user ID, and refers to the authentication history information storage section 110 to check whether or not the ID management provider user ID is authenticated, thus determining whether or not the user in question is an authenticated user.

Note that in the present exemplary embodiment, the authentication execution section 111, upon accepting a request for authentication from any of the user terminals 401A, 401B, 402A, and 403B, receives an ID management provider, user ID and a password entered by a user from any of the user terminals 401A, 401B, 402A, and 403B, checks whether or not the password entered matches a password preset for the ID management provider user ID, and, when they match, determines that the user is authenticated.

The service providing sections 306A and 306B each have a function of providing a service to any of the user terminals 401A, 401B, 402A, and 403B. Moreover, the service providing sections 306A and 306B each have a function of, before providing a service, to authenticate a user requesting access, transmitting a carrier user ID to the user authentication sections 307A and 307B, respectively, and requesting to authenticate the user. In the present exemplary embodiment, it is assumed that the service providing sections 306A and 306B provide a service of providing news information to user terminals.

The user authentication sections 307A and 307B each have a function of receiving a carrier user ID from the service providing sections 306A and 306B, respectively, transmitting the carrier user ID to the authentication execution section 111 of the ID management system 150, and checking whether or not the user in question is authenticated.

### 5.2) Operation

Next, operation according to the present exemplary embodiment will be described.

### 5.2.1) Authentication registration

First, authentication registration processing as shown in FIG. 20 (Steps S5-S-1 to S5-S-2) is performed before the operation according to the present exemplary embodiment.

For example, it is assumed that the user 3 transmits his/her ID management provider user ID (user3@idp) and a password to the authentication execution section 111 by using the user terminal 403B (Step S5-S-1). The authentication execution section 111, upon receiving the above-mentioned ID management provider user ID (user3@idp) and password transmitted from the user terminal 403B, checks whether or not the password matches a registered password that is preset for the ID management provider user ID in question. If the received password matches the registered password, the authentication execution section 111 determines that authentication has succeeded and stores the received ID management provider user ID and the date and time of authentication in the authentication history information storage section 110, associating them with each other (Step S5-3-2). Here, information that "user3@dip" is authenticated at "2006/06/10 9:03" is assumed to be stored in the authentication history information storage section 110.

By storing authentication history as described above, it is possible for the user 3 to request by using the user terminal 403B to obtain, for example, news information from the service providing section 306B of the communication system 330B run by the carrier B. Specifically, the user terminal 403B transmits a request for information, containing a carrier user ID, to the service providing section 306B (Step S5-S-3). Here, it is assumed that the carrier user ID (user3@b.com) of the user 3 on the carrier B is transmitted from the user terminal 403B to the service providing section 306B.

The service providing section 306B, to authenticate the user requesting access, transmits the carrier user ID (user3@b.com) to the user authentication section 307B. Upon receiving the carrier user ID, the user authentication section 307B, to perform authentication, transmits the received carrier user ID to the authentication execution section 111 of the ID management system 150 (Step S5-S-4). Here, the carrier user ID (user3@b.com) is transmitted from the user authentication section 307B to the authentication execution section 111.

The authentication execution section 111, upon receiving the carrier user ID, refers to the ID federation information in the ID federation information storage section 105 based on the carrier user ID and acquires an ID management provider user ID that is ID-federated with the received carrier user ID. The authentication execution section 111 then determines, by referring to the authentication history information storage section 110, whether or not the ID management provider user ID has been authenticated, thereby determining whether or not the user identified by the ID management provider user ID has been authenticated (Step S5-S-5).

For example, when the ID federation information is stored is the ID federation information storage section 105 as shown in FIG. 4, it is found, by searching the ID federation information storage section 105, that an ID management provider user ID corresponding to the carrier user ID (user3@b.com) is "user3@idp". The authentication execution section 111 then refers to the authentication history information storage section 110 shown in FIG. 21 by using the ID management provider user ID "user3@idp", thereby finding that the ID management provider user ID "user3@idp" was authenticated at "2006/06/10 9:03". If more than one day has not elapsed since this date and time of authentication (for example, this step is processed at "2006/06/10 9:10"), then it is determined that the ID management provider user ID "user3@idp" has been authenticated. The authentication execution section 111 then determines that if the ID management provider user ID "user3@idp" has been authenticated, the corresponding carrier user ID (user3@b.com) has also been authenticated and returns to the user authentication section 307B information that the carrier user ID (user3@b.com) has been authenticated (Step S5-S-6).

The user authentication section 307B receives the information on whether or not the user has been authenticated from the authentication execution section 111 and returns that information to the service providing section 306B. Here, the user authentication section 307B returns to the service providing section 306B the information that the carrier user ID (user3@b.com) has been authenticated.

The service providing section 306B provides news information to the authenticated user terminal. Here, since the carrier user 10 (user3@b.com) has been authenticated, the service providing section 306B provides news information to the user terminal 403B (Step S5-S-7).

### 5.2.2) Operation example

Steps S5-S-8 to S5-S-10, which are processing characterizing the present exemplary embodiment, are performed in a state where the authentication registration processing (Steps S5-S-1 and S5-S-2) is completed, as shown in FIG. 20 , Since the other processing steps are basically similar to those or the first and second exemplary embodiments shown in FIGS. 7 and 11 respectively, they are denoted by the same reference signs as in FIGS. 7 and 11, and a description thereof will be omitted. A detailed description will be given below with reference to FIGS. 19 and 20. Hereinafter, a processing step related to the delivery system 330A (carrier A) in the present exemplary embodiment will be denoted by "Step S5-A-n" (n = 1, 2, ...).

First, referring to FIG. 20, the delivery reference list transmission section 106, upon generating a delivery-capable ccID set (Step S2-S-2) , transmits the delivery-capable ccID set and a delivery request ID to the number-of-potential-deliverees calculation section 107.

Subsequently, the number-of-potential-deliverees calculation section 107 refers to the ID federation information storage section 104 and specifies a user who is federated with a delivery-capable carrier included in the delivery-capable ccID set and has not been allocated a delivery (Step S5-A-1). For example, the number-of-potential-deliverees calculation section 107 finds by referring to the ID federation information storage section 105 that "user3@idp" is ID-federated with the carrier B. That is, it is found that the carrier B is capable of delivering to "user3@idp".

Next, the number-of-potential-deliverees calculation section 107, to further check whether or not the potential-deliveree user is still authenticated, transmits the ID management provider user ID (userIDidp) of the potential-deliveree user to the authentication effectiveness calculation section 109 (Step S5-A-2). Here, "user3@idp" is transmitted to the authentication effectiveness calculation section 109 as a userIDidp.

The authentication effectiveness calculation section 109, upon receiving this userIDidp, refers to the authentication history information storage section 110 and acquires information on the latest date and time this userIDidp was authenticated (Step S5-A-3). Here, it is assumed to acquire, for example, the information that "user3@idp" was authenticated at "2006/06/10 9:03" from FIG. 21.

Next, the authentication effectiveness calculation section 109 determines whether or not more time than a preset value has elapsed since the date and time of the authentication, thereby determining whether the user has been authenticated (Step S5-A-4). Here, for example, assuming that the effectiveness of authentication lasts for only one day after authentication is performed and that the present date and time is "2006/06/13 9: 03",then the time of the authentication, "2006/06/10 9:03", is more than one day before the present time. Therefore, it is determined that "user3@idp" is not authenticated.

Next, the authentication effectiveness calculation section 109 returns information on whether or not the user has been authenticated to the number-of-potential-deliverees calculation section 107 (Step S5-A-5). Here, information that "user3@idp" is "not authenticated" is returned from the authentication effectiveness calculation section 109 to the number-of-potential-deliverees calculation section 107. Upon acquiring the information on whether or not the user has been authenticated from the authentication effectiveness calculation section 109, the number-of-potential-deliverees calculation section 107, based on that information, increases the number of potential-deliveree users with effective authentication by "1" in case of "authenticated" but does not increase the number of potential-deliveree users with effective authentication in case of "no authenticated" (Step S5-A-6). Here, since "user3@idp" is not authenticated, the number-of-potential-deliveree, calculation section 107 does not increase the number of potential-deliveree users with effective authentication, resulting in the number of potential-deliveree users with effective authentication remaining "0". Therefore, since the number of potential-deliveree users with effective authentication is "0" with respect to the carrier B, the number-of-potential-deliverees calculation section 107 performs calculation to obtain information that (ID of carrier B, the number of potential-deliveree users with effective authentication) ("ccID-B",0).

In such a manner, by referring to the authentication history information storage section 110, a number-of-potential-deliverees-with-effective-authentica tion list (ID of the carrier B, the number of potential-deliveree users with effective authentication) is generated (FIG. 20: Step S5-S-8), and the number-of-potential-deliverees-with-effective-authentica tion list is transmitted to the delivery system A (FIG. 20: Step S5-S-9). Upon receiving the number-of-potential-deliverees-with-effective authentica tion list, the delivery reference transfer list determination section 305A can select a transfer-destination carrier depending on the number of users with effective authentication (FIG. 20: Step S5-S-10).

### 5.3) Effects

Next, effects of the present exemplary embodiment will be described. In the present exemplary embodiment, the number-of-potential-deliverees calculation section 107 has a function of returning the number of potential-deliveree users still authenticated. Therefore, according to the present exemplary embodiment, when any of the delivery systems 330A and 330B selects a transfer-destination carrier, it is possible to select a transfer-destination carrier not only depending on the number of potential-deliveree users but also depending on the number of potential-deliveree users still authenticated. Since an authenticated user is likely to read a message scorer, the present exemplary embodiment is effective in a case of desiring to send a message demanding immediacy, and others.

### 6. Sixth exemplary embodiment

Next, a sixth exemplary embodiment of the present invention will be described with reference to the drawings. In the sixth exemplary embodiment of the present invention, the number of authentications is added as selection criterion information to each carrier ID in the delivery-capable ccID set 603.

### 6.1) Configuration

In a message delivery system according to the sixth exemplary embodiment shown in FIG. 22, the same components as those of the fifth exemplary embodiment shown in FIG. 19 are denoted by the same reference signs as in FIG. 19, and a description thereof will be omitted. The message delivery system according to the sixth exemplary embodiment is assumed to include an ID management system 160, the service providing system 200, the service providing system manager terminal 250, the delivery systems 330A and 330B, the user terminals 401A, 401B, 402A, and 403B, and a network connecting these systems and terminals so that they can communicate with each other.

Compared with the fifth exemplary embodiment shown in FIG. 19, the present exemplary embodiment is different in the configuration of the ID management system 160. Specifically, the ID management system 160 is characterized in that an authentication frequency calculation section 112 is provided instead of the authentication effectiveness calculation section 109 in the configuration of the ID management system 150 shown in FIG. 19. The authentication frequency calculation section 112 has a function of receiving a request to acquire information on whether or not a user designated by the number-of-potential-deliverees calculation section 107 has been authenticated frequently, referring to the authentication history information storage section 110, and determining whether or not the number of authentications is large.

### 6.2) Operation

Next, operation according to the present exemplary embodiment will be described. In the present exemplary embodiment, processing described below is performed instead of Step S5-S-8 in FIG. 20. Hereinafter, a processing step related to the delivery system 330A (carrier A) in the present exemplary embodiment will be denoted by "Step S6-A-n" (n = 1, 2, ...) .

To check whether or not a user has been authenticated frequently, the number-of-potential-deliverees calculation section 107 transmits the ID management provider user ID of a potential-deliveree user to the authentication frequency calculation section 112 (Step S6-A-1). Here, the number-of-potential-deliverees calculation section 107 transmits "user3@dip", which is the ID management provider user ID of a patential-deliveree user, to the authentication frequency calculation section 112.

The authentication frequency calculation section 112, upon receiving the ID management provider user ID, refers to the authentication history information storage section 111 and acquires the number of authentications performed on this ID management provider user ID (Step S6-A-2). Here, for example, it is assumed to acquire information that "user3@idp" was authenticated at "2006/06/13 9:03".

Next, the authentication frequency calculation section 112 determines whether or not the number of authentications is larger than a preset value, thereby determining whether or not the ID management provider user ID has been authenticated frequently (Step S6-A-3). Here, a description will be continued assuming that, for example, if the number of authentications is five or larger, it is determined that an ID of interest has been authenticated frequently. In the present case, since the number of authentication is one, the authentication frequency calculation section 112 determines that the number of authentication is not large. Subsequently, the authentication frequency calculation section 112 returns to the number-of-potential-deliverees calculation section 107 information on whether or not the number of authentications is large (Step S6-A-4). Here, the authentication frequency calculation section 112 returns information of "not large" to the number-of-potential-deliverees calculation section 107.

The number-of-potential-deliverees calculation section 107, upon acquiring the information on whether or not the number of authentications is large from the authentication frequency calculation section 112, increases the number of potential-deliveree users frequently authenticated by "1" when the number of authentications is large but does not increase the number of potential-deliveree users frequently authenticated when the number of authentications is not large (Step S6-A-5). Here, since the number of authentications performed on "user3@idp" is "not large", the number-of-potential-deliverees calculation section 107 does not increase the number of potential-deliveree users frequently authenticated, resulting in the number of potential-deliveree users frequently authenticated remaining an initial value of "0". Therefore, since the number of potential-deliveree users frequently authenticated is "0" with respect to the carrier B, the number-of-potential-deliverees calculation section 107 generates a number-of-potential-deliveree-users-frequently-authentic ated list (ID of the carrier B, the number of potential-deliveree users frequently authenticated) = ("ccID-B", 0).

In such a manner, by referring to the authentication history information storage section 110, the number-of-potential-deliveree-users-frequently-authentic ated list (ID of the carrier B, the number of potential-deliveree users frequently authenticated) is generated, and the number-of-potential-deliveree-users-frequently-authentic ated list is transmitted to the delivery system A. Upon receiving the number-of-potential-deliveree-users-frequently-authentic ated list, the delivery reference transfer list determination section 305A can select a transfer-destination carrier depending on the number of authentications.

### 6.3) Effects

Next, effects of the present exemplary embodiment will be descried. In the present exemplary embodiment, the number-of-potential-deliverees calculation section 107 of the ID management system 160 has a function of returning the number of potential-deliveree users frequently authenticated. Therefore, according to the present exemplary embodiment, when any of the delivery systems 330A and 330B selects a transfer-destination carrier, it is possible to select a transfer-destination carrier depending on the number of potential-deliveree users frequently authenticated. Since a user frequently authenticated is likely to read a message sooner, the present exemplary embodiment is effective in a case of desiring to send a message demanding immediacy, and others.

### 7. Seventh exemplary embodiment

Next, a seventh exemplary embodiment of the present invention will be described with reference to the drawings. According to the seventh exemplary embodiment of the present invention, a carrier ID to be registered in the delivery-capable ccIDset 603 is filtered in accordance with a predetermined policy before it is transmitted to a delivery system.

### 7.1) Configuration

In a message delivery system according to the seventh exemplary embodiment shown in FIG. 23, the same components as those of the second exemplary embodiment shown in FIG. 10 are denoted by the same reference signs as in FIG. 10, and a description thereof will be omitted. The message delivery system according to the present exemplary embodiment is assumed to include an ID management system 170, the service providing system 200, the service providing system manager terminal 250, delivery systems 340A and 340B, the user terminals 401A, 401B, 402A, and 403B, and a network connecting these systems and terminals so that they can communicate with each other.

Compared with the second exemplary embodiment shown in FIG. 10, the present exemplary embodiment is different in the configurations of the ID management system 170 and delivery systems 340A and 340B. Specifically, the configuration of the ID management system 170 in FIG. 23 is that of the ID management system 120 in FIG. 10 to which a delivery reference policy evaluation section 113, a delivery reference policy storage section 114, and a delivery reference policy setting section 115 are added. Moreover, the configurations of the delivery systems 340A and 340B in FIG. 23 are those of the delivery systems 320A and 320B in FIG. 10, respectively, to which delivery reference policy transmission sections 308A and 308B are added, respectively.

The delivery reference policy storage section 114 has a function of storing rule information on whether or not a carrier may be included in a delivery reference list. Specifically, information on whether a carrier "may" or "may not" be included in a delivery reference list is stored, associated with its carrier ID. In the present exemplary embodiment, it is assumed that rule information that "the carrier B 'may' be included in a delivery reference list" is stored, for example.

The delivery reference policy evaluation section 113 has a function of acquiring from the delivery reference policy storage section 114 rule information on whether a carrier "may" or "may not" be included in a delivery reference list, associated with its carrier ID. Moreover, the delivery reference policy evaluation section 113 has a function of transmitting the rule information on whether the carrier "may" or "may not" be included in a delivery reference list to the delivery reference list transmission section 106.

The delivery reference policy transmission sections 308A and 308B each have a function of transmitting rule information on whether a carrier "may" or "may not" be included in a delivery reference list to the delivery reference policy setting section 115.

The delivery reference policy setting section 115 has a function of receiving a carrier ID and rule information regarding the carrier from any of the delivery reference policy transmission sections 308A and 308B and storing in the delivery reference policy storage section 114 the rule information on whether the carrier "may" or "may not" be included in a reference list, associating it with the carrier ID.

### 7.2) Operation

Next, operation according to the present exemplary embodiment will be described. The delivery reference transfer list determination sections 305A and 305B each perform processing as described below on the carrier ID of each carrier in a delivery-capable ccID set. Hereinafter, a processing step related to the delivery system 340A (carrier A) in the present exemplary embodiment will be denoted by "Step S7-A-n" (n = 1, 2, ...).

First, the delivery reference list transmission section 106 transmits the carrier ID of each carrier in a delivery-capable ccID set to the delivery reference policy evaluation section 113 (Step S7-A-1). The delivery preference policy evaluation section 113, upon receiving the above-mentioned carrier ID, refers to the delivery reference policy storage section 114 and acquires rule information, associated with the carrier ID, on whether the carrier "may" or "may not" be included in a reference list (Step S7-A-2).

The delivery reference policy evaluation section 113 evaluates the acquired rule information, determines whether the carrier ID "may" or "may not" be included in a reference list and transmits the result of determination to the delivery reference list transmission section 106. Here, the delivery reference policy evaluation section 113 acquires the rule information that "the carrier B 'may' be included in a delivery reference list" from the delivery reference policy storage section 114. Therefore, the delivery reference policy evaluation section 113 evaluates this rule information, determines that the carrier B "may" be included in a delivery reference list, and transmits that result of determination to the delivery reference list transmission section 106 (Step S7-A-3).

Based on the result of determination from the delivery reference policy evaluation section 113, the delivery reference list transmission section 106 adds the corresponding carrier ID to the delivery-capable carrier set when the carrier "may" be included in a delivery reference list but does not add the corresponding carrier ID to the delivery-capable carrier set when the carrier "may not" be included in a delivery reference list (Step S7-A-4). Here, since the carrier B may be included in a delivery reference list, its carrier ID is added to the delivery-capable carrier set. The delivery reference list transmission section 106 transmits the generated delivery reference list (delivery-capable carrier set) to any one of the delivery reference transfer list determination sections 305A and 305B (Step S7-A-5).

### 7.3) Effects

Next, effects of the present exemplary embodiment will be described. In the present exemplary embodiment, the delivery reference policy evaluation section 113 has a function of determining whether or not a carrier "may" be included in a delivery reference list, and based on the result of determination, the delivery reference list transmission section 106 can control whether or not to include the carrier ID in a delivery reference list to output. Thereby, according to the present exemplary embodiment, if a carrier does not desire to be transferred to, control can be made such that a transfer will not be made to the carrier, by setting such a rule that the carrier "may not" be included in a delivery reference list.

### 8. Eighth exemplary embodiment

Next, an eighth exemplary embodiment of the present invention will be described with reference to the drawings. In the eighth exemplary embodiment of the present invention, when actually selecting a transfer destination from the delivery-capable ccID set 603, a transfer destination is selected after cost is calculated.

### 8.1) Configuration

In a message delivery system according to the eighth exemplary embodiment shown in FIG. 24, the same components as those of the third exemplary embodiment shown in FIG. 14 are denoted by the same reference signs as in FIG. 14, and a description thereof will be omitted. The message delivery system according to the present exemplary embodiment is assumed to include the ID management system 130, the service providing system 200, the service providing system manager terminal 250, delivery systems 350A and 350B, the user terminals 401A, 401B, 402A, and 403B, and a network connecting these systems and terminals so that they can communicate with each other. Moreover, although not shown in the drawings one or more third delivery systems having the same configuration as those of the delivery systems 350A and 350B may be included.

Compared with the third exemplary embodiment shown in FIG. 14, the present exemplary embodiment is different in the configurations of the delivery systems 350A and 350B. Specifically, the configurations of the delivery systems 350A and 350B of the present exemplary embodiment are those of the delivery systems 320A and 320B shown in FIG. 11, respectively, to which delivery reference cost information storage sections 309A and 309B are added, respectively, and in which the delivery reference transfer list determination sections 305A and 305B in FIG. 14 are replaced with delivery reference transfer cost determination sections 310A and 310B, respectively.

The delivery reference cost information storage sections 309A and 309B each store a carrier ID and calculation rule information regarding communication cost, reference fee, and the like incurred when a transfer is made to the carrier ID as transfer destination, associating them with each other. In the present exemplary embodiment, it is assumed that first calculation rule information and second calculation rule information are stored in the delivery reference cost information storage section 309A. For example, for the first calculation rule information, the carrier ID of the carrier B is associated with information that "as to communication cost, the transfer-source carrier pays the transfer-destination carrier 10 yen (¥) per person to whom a delivery is made; as to reference fee, the transfer-source carrier pays a commission of 100 yen to the transfer-destination carrier". For the second calculation rule information, a carrier ID of a carrier C, which runs a third delivery system (not shown), is associated with information that "as to communication cost, the transfer-source carrier pays the transfer-destination carrier 10 yen per person to whom a delivery is made; as to reference fee, the transfer-source carrier pays a commission of 200 yen to the transfer-destination carrier".

### 8.2) Operation

Next, operation according to the present exemplary embodiment will be described. Hereinafter, a processing step related to the delivery system 350A (carrier A) in the present exemplary embodiment will be denoted by "Step S8-A-n" (n = 1, 2, ...).

First, the delivery reference transfer cost determination section 310A of the delivery system 350A having received a request to deliver a message receives a list including a set of a delivery-capable carrier ID and the number of potential deliverees from the delivery reference list transmission section 106 (Step S8-A-1). Here, it is assumed that ("ccID-B", 1) is received.

Upon this receipt, the delivery reference transfer cost determination section 310A refers to the delivery reference cost information storage section 309A and acquires calculation rule information associated with the carrier ID (Step S8-A-2). Thus, the delivery reference transfer cost determination section 310A acquires the first and second calculation rule information associated with the carrier ID "ccID-B".

Subsequently, the delivery reference transfer cost determination section 310A evaluates the acquired calculation rule information and calculates a total cost incurred when making a transfer (Step S8-A-3). Here, since the number of deliverees is one, the delivery reference transfer cost determination section 310A calculates that a total cost of 110 yen (= a transfer cost of 10 yen + a reference commission of 100 yen) is incurred when requesting a transfer of the carrier B and that a total cost of 210 yen (= a transfer cost of 10 yen + a reference commission of 200 yen) is incurred when requesting a transfer of the carrier C.

Subsequently the delivery reference transfer cost determination section 310A compares the total costs calculated for all the carrier IDs and determines that a carrier of the lowest total cost should be transfer-requested (Step S8-A-4). Here, the delivery reference transfer cost determination section 310A determines that the carrier B is a transfer-request-destination carrier.

Based on the above-described result of determination made by the delivery reference transfer cost determination section 310A, the delivery reference transfer section 304A transmits information requesting to transfer the message to the delivery deception section of the delivery system run by the transfer-request-destination carrier (Step S8-A-5). Here, since the transfer-request-destination carrier is the carrier B, the delivery reference transfer cost determination section 310A requests the delivery reception section 301B of the delivery system B to transfer the message.

### 8.3) Effects

Next, effects of the present exemplary embodiment will be described. In the present exemplary embodiment, the delivery reference transfer cost determination sections 310A and 310B each have a function of calculating a total cost when transferring a message and can determine a transfer destination depending on the total cost. Thereby, according to the present exemplary embodiment, it is possible to select a carrier so that a request to transfer a message is made to a carrier of the lowest total cost.

Note that the present invention is not limited to the above-described exemplary embodiments. For example, the present invention embraces programs for message delivery causing a computer to execute the functions of the individual components of the first to eighth exemplary embodiments as described above.

### [Industrial Applicability]

The present invention is applicable to various uses, such as a case where, when a service provider providing delivery of contents and the like delivers a message to a user, the service provider requests delivery of the message from a carrier such as an ISP, a mobile-telecommunication carrier, or a fix-telecommunication carrier to which the user subscribes.

### [Reference Signs List]

- 100, 120, 130, 140, 150, 160, 170: ID management system
- 101: Delivery request ID supply section
- 102: Delivery request ID information storage section
- 103: Deliveree user ID resolution section
- 104: Allocated-user information storage section
- 105: ID federation information storage section
- 106: Delivery reference list transmission section
- 107: Number-of-potential-deliverees calculation section
- 108: User sharing ratio calculation section
- 109: Authentication effectiveness calculation section
- 110: Authentication history information storage section
- 111: Authentication execution section
- 112: Authentication frequency calculation section
- 113: Delivery reference policy evaluation section
- 114: Delivery reference policy storage section
- 115: Delivery reference policy setting section
- 200: Service providing system
- 201: Message contents reception section
- 202: Delivery request ID acquisition section
- 203: Delivery request section
- 250: Service providing system manager terminal
- 300A, 300B, 320A, 320B, 330A, 330B, 340A, 340B: Delivery system
- 301A, 301B: Delivery reception section
- 302A, 302B: Deliveree user ID acquisition section
- 303A, 303B: Delivery section
- 304A, 304B: Delivery reference transfer transmission section
- 305A, 305B: Delivery reference transfer list determination section
- 306A, 306B: Service providing section
- 307A, 307B: User authentication section
- 308A, 308B: Delivery reference policy transmission section
- 309A, 309B: Delivery reference cost information storage section
- 310A, 310B: Delivery reference transfer cost determination section
- 401A, 401B, 402A, 403B: User terminal

## Claims

1. A message delivery system for delivering a message to a user, **characterized by**:
a plurality of delivery means which are run by a plurality of carriers respectively and deliver information to subscribers to the respective carriers; and
an ID management means which can communicate with the plurality of delivery means,
wherein when a delivery means receives a request to deliver a message, the delivery means transmits to the ID management means a request for user identifier resolution to deliver the message,
upon receiving the request for user identifier resolution from the delivery means, the ID management means resolves a user identifier to which a carrier running the delivery means can deliver and to which a delivery of the message has not been allocated, and returns the user identifier as a user identifier candidate to the delivery means, and
the delivery means delivers the message to a user identified by the user identifier included in the user identifier candidate.

2. The message delivery system according to claim 1, **characterized in that** the delivery means transfers the request to deliver the message to another delivery means, and the other delivery-means that has received the request to deliver the message transmits a request for user identifier resolution to the ID management means and thereby receives a user identifier candidate obtained for the other delivery system.

3. The message delivery system according to claim 1 or 2, **characterized in that** the ID management means includes:
an identifier federation storage means which stores by user and by carrier a plurality of user identifiers managed by the plurality of carriers, wherein the user identifiers are federated with each other;
an allocated-user information storage means which registers by message a user already allocated a delivery of the message; and
a user identifier resolution section which, by referring to the identifier federation storage means and allocated-user information storage means, resolves a user identifier to which the carrier running the delivery means can deliver and to which a delivery has not been allocated to generate the user identifier candidate, registers the resolved user with the allocated-user information storage means, and returns the user identifier candidate to the delivery means.

4. The message delivery system according to claim 1 or 2, **characterized in that**, when there is another carrier that can deliver to a user who has not been allocated a delivery of the message, the ID management means transmits to the delivery means a transfer destination candidate including a delivery system of the other carrier as a transfer destination, and
the delivery means transfers the request to deliver the message to the transfer-destination delivery system selected from the transfer destination candidate.

5. The message delivery system according to claim 4, **characterized in that** the ID management means includes:
an identifier federation storage means which stores by user and by carrier a plurality of user identifiers managed by the plurality of carriers, wherein the user identifiers are federated with each other;
an allocated-user information storage means which registers by message a user already allocated a delivery of the message; and
a user identifier resolution section which, by referring to the identifier federation storage means and allocated-user information storage means, resolves a user identifier to which the carrier running the delivery means can deliver and to which a delivery has not been allocated to generate the user identifier candidate, registers the resolved user with the allocated-user information storage means, and returns the user identifier candidate to the delivery means; and
a transfer destination candidate generation section which, by referring to the identifier federation storage means and allocated-user information storage means, retrieves another carrier that can deliver to a user who has not been allocated a delivery of the message to generate the transfer destination candidate, and returns the transfer destination candidate to the delivery means.

6. The message delivery system according to claim 4, **characterized in that** the ID management means transmits to the delivery means, as the transfer destination candidate, a list including a number of potential-deliveree users to whom the transfer destination can deliver, and
the delivery means transfers the request to deliver the message to the transfer-destination delivery system selected from the transfer destination candidate based on the number of potential-deliveree users.

7. The message delivery system according to claim 6, **characterized in that** the ID management means includes:
an identifier federation storage means which stores by user and by carrier a plurality of user identifiers managed by the plurality of carriers, wherein the user identifiers are federated with each other;
an allocated-user information storage means which registers by message a user already allocated a delivery of the message; and
a user identifier resolution section which, by referring to the identifier federation storage means and allocated-user information storage means, resolves a user identifier to which the carrier running the delivery means can deliver and to which a delivery has not been allocated to generate the user identifier candidate, registers the resolved user with the allocated-user information storage means, and returns the user identifier candidate to the delivery means; and
a transfer destination candidate generation section which, by referring to the identifier federation storage means and allocated-user information storage means, retrieves another carrier that can deliver to a user who has not been allocated a delivery of the message to generate the transfer destination candidate, and returns the transfer destination candidate to the delivery means; and
a number-of-potential-deliverees calculation section which, by referring to the identifier federation storage means and allocated-user information storage means, if there is another carrier that can deliver to a user who has not been allocated a delivery, calculates the number of potential-deliveree users to whom the other carrier can deliver.

8. The message delivery system according to claim 4, **characterized in that** the ID management means transmits to the delivery means, as the transfer destination candidate, a list including a user sharing ratio, which is a ratio of a number of users who subscribe to both of the other carrier and the carrier running the delivery means to a number of users of the other carrier, and
the delivery means transfers the request to deliver the message to a transfer-destination delivery means selected from the transfer destination candidate based on the user sharing ratio.

9. The message delivery system according to claim 8, **characterized in that** the ID management means includes:
an identifier federation storage means which stores by user and by carrier a plurality of user identifiers managed by the plurality of carriers, wherein the user identifiers are federated with each other;
an allocated-user information storage means which registers by message a user already allocated a delivery of the message; and
a user identifier resolution section which, by referring to the identifier federation storage means and allocated-user information storage means, resolves a user identifier to which the carrier running the delivery means can deliver and to which a delivery has not been allocated to generate the user identifier candidate, registers the resolved user with the allocated-user information storage means, and returns the user identifier candidate to the delivery means; and
a transfer destination candidate generation section which, by referring to the identifier federation storage means and allocated-user information storage means, retrieves another carrier that can deliver to a user who has not been allocated a delivery of the message to generate the transfer destination candidate, and returns the transfer destination candidate to the delivery means; and
a user sharing ratio calculation section which, by referring to the identifier federation storage means and allocated-user information storage means, calculates the user sharing ratio, which is the ratio of the number of users who subscribe to both of the other carrier and the carrier running the delivery means to the number of users of the other carrier.

10. The message delivery system according to claim 4, **characterized in that** the ID management means, in response to a request for authentication from each user, registers the user as authenticated and transmits to the delivery means, as the transfer destination candidate, a list including, as a number of potential-deliveree users with effective authentication, a number of users to whom the other carrier can deliver and whose pre-registered authentication is effective among those users who have not been allocated a delivery of the message, and
the delivery means transfers the request to deliver the message to the transfer-destination delivery means selected from the transfer destination candidate based on the number of potential-deliveree users with effective authentication.

11. The message delivery system according to claim 4, **characterized in that** the ID management means, in response to a demand for authentication from each user, registers the user as authenticated and transmits to the delivery means, as the transfer destination candidate, a list including, as a number of potential-deliveree users frequently authenticated, a number of users to whom the another carrier can deliver and who have been authenticated more frequently than a predetermined number of times among those users who have not been allocated a delivery of the message, and
the delivery means transfers the request to deliver the message to the transfer-destination delivery means selected from the transfer destination candidate based on the number of potential-deliveree users frequently authenticated.

12. The message delivery system according to claim 4, **characterized in that** the ID management means stores policy information, set by the delivery means, on whether or not to allow a predetermined delivery means to become a transfer destination and transmits to the delivery means a transfer destination candidate in which a transfer destination is set in accordance with the policy information, and
the delivery means transfers the request to deliver the message to every transfer-destination delivery means included in the transfer destination candidate.

13. The message delivery system according to claim 4, **characterized in that** each of the plurality of delivery means stores a basic cost incurred when delivering the request to deliver the message to a delivery means of another carrier,
the ID management means transmits to the delivery means, as the transfer destination candidate, a list including a number of potential-deliveree users to whom the transfer destination can deliver, and
the delivery means calculates, for each transfer-destination delivery means in the transfer destination candidate, a total cost from the number of potential-deliveree users and the basic cost incurred when the transfer-destination delivery means delivers, and transfers the request to deliver the message to a transfer-destination delivery means of the lowest total cost.

14. A message delivery method in a communication system for delivering a message to a user,
wherein the communication system includes: a plurality of delivery means which are run by a plurality of carriers respectively and deliver information to subscribers to the respective carriers; and an ID management means which can communicate with the plurality of delivery means,
the method **characterized by** comprising:
by a delivery means, upon receiving a request to deliver a message, transmitting to the ID management means a request for user identifier resolution to deliver the message;
by the ID management means, upon receiving the request for user identifier resolution from the delivery means, resolving a user identifier to which a carrier running the delivery means can deliver and to which a delivery of the message has not been allocated, and returning the user identifier as a user identifier candidate to the delivery means; and
by the delivery means, delivering the message to a user identified by the user identifier included in the user identifier candidate.

15. The message delivery method according to claim 14, **characterized by** further comprising: by the delivery means, transferring the request to deliver the message to another delivery means; and by each delivery means that has received the request to deliver the message, transmitting a request for user identifier resolution to the ID management means and thereby receiving a user identifier candidate obtained for the other delivery means.

16. The message delivery method according to claim 14 or 15, **characterized in that** the ID management means includes: an identifier federation storage means which stores by user and by carrier a plurality of user identifiers managed by the plurality of carriers, wherein the user identifiers are federated with each other; and an allocated-user information storage means which registers by message a user already allocated a delivery of the message,
wherein the ID management means, by referring to the identifier federation storage means and allocated-user information storage means, resolves a user identifier to which the carrier running the delivery means can deliver and to which a delivery has not been allocated to generate the user identifier candidate,
registers the resolved user with the allocated-user information storage means, and
returns the user identifier candidate to the delivery means.

17. The message delivery method according to claim 14 or 15, **characterized in that**, when there is another carrier that can deliver to a user who has not been allocated a delivery of the message, the ID management means transmits to the delivery means a transfer destination candidate including a delivery means of the other carrier as a transfer destination, and
the delivery means transfers the request to deliver the message to a transfer-destination delivery means selected from the transfer destination candidate.

18. The message delivery method according to claim 17, **characterized in that** the ID management means includes: an identifier federation storage means which stores by user and by carrier a plurality of user identifiers managed by the plurality of carriers, wherein the user identifiers are federated with each other; and an allocated-user information storage means which registers by message a user already allocated a delivery of the message,
wherein the ID management means, by referring to the identifier federation storage means and allocated-user information storage means, resolves a user identifier to which the carrier running the delivery means can deliver and to which a delivery has not been allocated to generate the user identifier candidate,
registers the resolved user with the allocated-user information storage means, and
returns the user identifier candidate to the delivery means,
by referring to the identifier federation storage means and allocated-user information storage means, retrieves another carrier that can deliver to a user who has not been allocated a delivery of the message to generate the transfer destination candidate, and
returns the transfer destination candidate to the delivery means.

19. The message delivery method according to claim 17, **characterized in that** the ID management means transmits to the delivery means, as the transfer destination candidate, a list including a number of potential-deliveree users to whom the transfer destination can deliver, and
the delivery means transfers the request to deliver the message to a transfer-destination delivery means selected from the transfer destination candidate based on the number of potential-deliveree users.

20. The message delivery method according to claim 19, **characterized in that** the ID management means includes: an identifier federation storage means which stores by user and by carrier a plurality of user identifiers managed by the plurality of carriers, wherein the user identifiers are federated with each other; and an allocated-user information storage means which registers by message a user already allocated a delivery of the message,
wherein the ID management means, by referring to the identifier federation storage means and allocated-user information storage means, resolves a user identifier to which the carrier running the delivery means can deliver and to which a delivery has not been allocated to generate the user identifier candidate,
registers the resolved user with the allocated-user information storage means, and
returns the user identifier candidate to the delivery means,
by referring to the identifier federation storage means and allocated-user information storage means, retrieves another carrier that can deliver to a user who has not been allocated a delivery of the message to generate the transfer destination candidate, and
by referring to the identifier federation storage means and allocated-user information storage means, if there is another carrier that can deliver to a user who has not been allocated a delivery, calculates the number of potential-deliveree users to whom the other carrier can deliver.

21. The message delivery method according to claim 17, **characterized in that** the ID management means transmits to the delivery means, as the transfer destination candidate, a list including a user sharing ratio, which is a ratio of a number of users who subscribe to both of the other carrier and the carrier running the delivery means to a number of users of the other carrier, and
the delivery means transfers the request to deliver the message to a transfer-destination delivery system selected from the transfer destination candidate based on the user sharing ratio.

22. The message delivery method according to claim 20, **characterized in that** the ID management means includes: an identifier federation storage means which stores by user and by carrier a plurality of user identifiers managed by the plurality of carriers, wherein the user identifiers are federated with each other; and an allocated-user information storage means which registers by message a user already allocated a delivery of the message,
wherein the ID management means, by referring to the identifier federation storage means and allocated-user information, storage means, resolves a user identifier to which the carrier running the delivery means can deliver and to which a delivery has not been allocated to generate the user identifier candidate,
registers the resolved user with the allocated-user information storage means, and
returns the user identifier candidate to the delivery means,
by referring to the identifier federation storage means and allocated-user information storage means, retrieves another carrier that can deliver to a user who has not been allocated a delivery of the message to generate the transfer destination candidate, and
by referring to the identifier federation storage means and allocated-user information storage means, calculates the user sharing ratio, which is the ratio of the number of users who subscribe to both of the other carrier and the carrier running the delivery means to the number of users of the other carrier.

23. The message delivery method according to claim 17, **characterized in that** the ID management means, in response to a request for authentication from each user, registers the user as authenticated and transmits to the delivery means, as the transfer destination candidate, a list including, as a number of potential-deliveree users with effective authentication, a number of users to whom the another carrier can deliver and whose pre-registered authentication is effective among those users who have not been allocated a delivery of the message, and
the delivery means transfers the request to deliver the message to a transfer-destination delivery means selected from the transfer destination candidate based on the number of potential-deliveree users with effective authentication.

24. The message delivery method according to claim 17, **characterized in that** the ID management means, in response to a request for authentication from each user, registers the user as authenticated and transmits to the delivery means, as the transfer destination candidate, a list including, as a number of potential-deliveree users frequently authenticated, a number of users to whom the other carrier can deliver and who have been authenticated more frequently than a predetermined number of times among those users who have not been allocated a delivery of the message, and
the delivery means transfers the request to deliver the message to a transfer-destination delivery means selected from the transfer destination candidate based on the number of potential-deliveree users frequently authenticated.

25. The message delivery method according to claim 17, **characterized in that** the ID management means stores policy information, set by the delivery means, on whether or not to allow a predetermined delivery means to become a transfer destination and transmits to the delivery means a transfer destination candidate in which a transfer destination is set in accordance with the policy information, and
the delivery means transfers the request to deliver the message to every transfer-destination delivery means included in the transfer destination candidate.

26. The message delivery method according to claim 15, **characterized in that** each of the plurality of delivery systems stores a basic cost incurred when delivering the request to deliver the message to a delivery means of another carrier,
the ID management means transmits to the delivery means, as the delivery destination candidate, a list including a number of potential-deliveree users to whom the transfer destination can deliver, and
the delivery means calculates, for each transfer-destination delivery means in the transfer destination candidate, a total cost from the number of potential-deliveree users and the basic cost incurred when the transfer-destination delivery means delivers, and transfers the request to deliver the message to a transfer-destination delivery means of the lowest total cost.

27. An ID management device which can communicate with a plurality of delivery means run by a plurality of carriers respectively and delivering information to subscribers to the respective carriers in a message delivery system for delivering a message to a user, **characterized by** comprising:
a user identifier resolution means which, upon receiving a request for user identifier resolution from a delivery means, resolves a user identifier to which a carrier running the delivery means can deliver and to which a delivery of the message has not been allocated; and
a transmission means which transmits a deliveree candidate list including the resolved user identifier to the delivery means.

28. The ID management device according to claim 27, **characterized by** further comprising :
an identifier federation storage means which stores by user and by carrier a plurality of user identifiers managed by the plurality of carriers, wherein the user identifiers are federated with each other; and
an allocated-user information storage means which registers by message a user already allocated a delivery of the message,
wherein the user identifier resolution means, by referring to the identifier federation storage means and allocated-user information storage means, resolves a user identifier to which the carrier running the delivery means can deliver and to which a delivery has not been allocated to generate the deliveree candidate list, and registers the resolved user with the allocated-user information storage means.

29. The ID management device according to claim 27, **characterized in that**, when there is another carrier that can deliver to a user who has not been allocated a delivery of the message, the user identifier resolution means transmits to the delivery means a transfer destination candidate including a delivery system of the other carrier as a transfer destination.

30. The ID management device according to claim 29, further comprising:
an identifier federation storage means which stores by user and by carrier a plurality of user identifiers managed by the plurality of carriers, wherein the user identifiers are federated with each other;
an allocated-user information storage means which registers by message a user already allocated a delivery of the message; and
a transfer destination candidate generation means,
wherein the user identifier resolution means, by referring to the identifier federation storage means and allocated-user information storage means, resolves a user identifier to which the carrier running the delivery means can deliver and to which a delivery has not been allocated to generate the deliveree candidate list, and registers the resolved user with the allocated-user information storage means, and
the transfer destination candidate generation means, by referring to the identifier federation storage means and allocated-user information storage means, retrieves another carrier that can deliver to a user who has not been allocated a delivery of the message to generate the transfer destination candidate, and transmits the transfer destination candidate to the delivery means.

31. The ID management device according to claim 29, **characterized in that** the user identifier resolution means transmits to the delivery means, as the transfer destination candidate, a list including a number of potential-deliveree users to whom the transfer destination can deliver, whereby it is possible for the delivery means to transfer the request to deliver the message to a transfer-destination delivery means selected from the transfer destination candidate based on the number of potential-deliveree users.

32. The ID management device according to claim 31, further comprising:
an identifier federation storage means which stores by user and by carrier a plurality of user identifiers managed by the plurality of carriers, wherein the user identifiers are federated with each other;
an allocated-user information storage means which registers by message a user already allocated a delivery of the message;
a transfer destination candidate generation means; and
a number-of-potential-deliverees calculation means,
wherein the user identifier resolution means, by referring to the identifier federation storage means and allocated-user information storage means, resolves a user identifier to which the carrier running the delivery means can deliver and to which a delivery has not been allocated to generate the user identifier candidate, and registers the resolved user with the allocated-user information storage means,
the transfer destination candidate generation means, by referring to the identifier federation storage means and allocated-user information storage means, retrieves another carrier that can deliver to a user who has not been allocated a delivery of the message to generate the transfer destination candidate, and
the number-of-potential-deliverees calculation means, by referring to the identifier federation storage means and allocated-user information storage means, if there is another carrier that can deliver to a user who has not been allocated a delivery, calculates the number of potential-deliveree users to whom the another carrier can deliver.

33. The ID management device according to claim 29, **characterized in that** the user identifier resolution means transmits to the delivery means, as the transfer destination candidate, a list including a user sharing ratio, which is a ratio of a number of users who subscribe to both of the other carrier and the carrier running the delivery means to a number of users of the other carrier, whereby it is possible for the delivery means to transfer the request to deliver the message to a transfer-destination delivery system selected from the transfer destination candidate based on the user sharing ratio.

34. The ID management device according to claim 33, further comprising:
an identifier federation storage means which stores by user and by carrier a plurality of user identifiers managed by the plurality of carriers, wherein the user identifiers are federated with each other;
an allocated-user information storage means which registers by message a user already allocated a delivery of the message;
a transfer destination candidate generation means; and
a user sharing ratio calculation means,
wherein the user identifier resolution means, by referring to the identifier federation storage means and allocated-user information storage means, resolves a user identifier to which the carrier running the delivery means can deliver and to which a delivery has not been allocated to generate the user identifier candidate, and registers the resolved user with the allocated-user information storage means,
the transfer destination candidate generation means, by referring to the identifier federation storage means and allocated-user information storage means, retrieves another carrier that can deliver to a user who has not been allocated a delivery of the message to generate the transfer destination candidate,
the number-of-potential-deliverees calculation means, by referring to the identifier federation storage means and allocated-user information storage means, if there is another carrier that can deliver to a user who has not been allocated a delivery, calculates the number of potential-deliveree users to whom the other carrier can deliver, and
the user sharing ratio calculation means, by referring to the identifier federation storage means and allocated-user information storage means, calculates the user sharing ratio, which is the ratio of the number of users who subscribe to both of the other carrier and the carrier running the delivery means to the number of users of the other carrier.

35. The ID management device according to claim 29, **characterized in that** the user identifier resolution section, in response to a demand for authentication from each user, registers the user as authenticated and transmits to the delivery means, as the transfer destination candidate, a list including, as a number of potential-deliveree users with effective authentication, a number of users to whom the other carrier can deliver and whose pre-registered authentication is effective among those users who have not been allocated a delivery of the message, whereby it is possible for the delivery means to transfer the request to deliver the message to a transfer-destination delivery system selected from the transfer destination candidate based on the number of potential-deliveree users with effective authentication.

36. The ID management device according to claim 29, **characterized in that** the user identifier resolution means, in response to a request for authentication from each user, registers the user as authenticated and transmits to the delivery means, as the transfer destination candidate, a list including, as a number of potential-deliveree users frequently authenticated, a number of users to whom the other carrier can deliver and who have been authenticated more frequently than a predetermined number of times among those users who have not been allocated a delivery of the message, whereby it is possible for the delivery means to transfer the request to deliver the message to a transfer-destination delivery system selected from the transfer destination candidate based on the number of potential-deliveree users frequently authenticated.

37. The ID management device according to claim 29, **characterized in that** the user identifier resolution means stores policy information, set by the delivery means, on whether or not to allow a predetermined delivery means to become a transfer destination and transmits to the delivery means a transfer destination candidate in which a transfer destination is set in accordance with the policy information, whereby it is possible for the delivery means to transfer the request to deliver the message to every transfer-destination delivery means included in the transfer destination candidate.

38. A delivery device run by each of a plurality of carriers and delivering information to subscribers to its corresponding carrier in a message delivery system, wherein the message delivery system includes an ID management device which, upon receiving a request for user identifier resolution from a single delivery device, resolves a user identifier to which a carrier running the single delivery device can deliver and to which a delivery of the message has not been allocated and returns the user identifier as a user identifier candidate to the single delivery device, the delivery device **characterized by** comprising:
a delivery reception means which receives a request to deliver a message;
a deliveree user identifier acquisition means which transmits to the ID management device a request for user identifier resolution to deliver the message; and
a delivery means which, upon receiving the user identifier candidate from the ID management device, delivers the message to a user identified by the user identifier included in the user identifier candidate.

39. The delivery device according to claim 38, **characterized by** further comprising a delivery reference transfer means which transfers the request to deliver the message to another delivery device.

40. The delivery device according to claim 39, **characterized in that**, when there is another carrier that can deliver to a user who has not been allocated a delivery of the message, the ID management device transmits a transfer destination candidate including a delivery device of the other carrier as a transfer destination, and
the delivery reference transfer means transfers the request to deliver the message to a transfer-destination delivery device selected from the transfer destination candidate.

41. The delivery device according to claim 40, **characterized in that** the ID management device transmits to the delivery device, as the transfer destination candidate, a list including a number of potential-deliveree users to whom the transfer destination can deliver, and
the delivery reference transfer means transfers the request to deliver the message to a transfer-destination delivery device selected from the transfer destination candidate based on the number of potential-deliveree users.

42. The delivery device according to claim 40, **characterized in that** the ID management device transmits to the delivery device, as the transfer destination candidate, a list including a user sharing ratio, which is a ratio of a number of users who subscribe to both of the other carrier and the carrier running the delivery device to a number of users of the other carrier, and
the delivery reference transfer section transfers the request to deliver the message to a transfer-destination delivery device selected from the transfer destination candidate based on the user sharing ratio.

43. The delivery device according to claim 40, **characterized in that** the ID management device, in response to a request for authentication from each user, registers the user as authenticated and transmits to the delivery device, as the transfer destination candidates, a list including, as a number of potential-deliveree users with affective authentication, a number of users to whom the other carrier can deliver and whose pre-registered authentication is effective among those users who have not been allocated a delivery of the message, and
the delivery reference transfer means transfers the request to deliver the message to a transfer-destination delivery device selected from the transfer destination candidate based on the number of potential-deliveree users with effective authentication.

44. The delivery device according to claim 40, **characterized in that** the ID management device, in response to a request for authentication from each user, registers the user as authenticated and transmits to the delivery device, as the transfer destination candidate, a list including, as a number of potential-deliveree users frequently authenticated, a number of users to whom the other carrier can deliver and who have been authenticated more frequently than a predetermined number of times among those users who have not been allocated a delivery of the message, and
the delivery reference transfer means transfers the request to deliver the message to a transfer-destination delivery device selected from the transfer destination candidate based on the number of potential-deliveree users frequently authenticated.

45. The delivery device according to claim 40, **characterized by** further comprising a cost information storage means which stores a basic cost incurred when delivering the request to deliver the message to another carrier's delivery device,
wherein the ID management device transmits to the delivery device, as the delivery destination candidate, a list including a number of potential-deliveree users to whom the transfer destination can deliver, and
the delivery reference transfer means calculates, for each transfer-destination delivery device in the transfer destination candidate, a total cost from the number of potential-deliveree users and the basic cost incurred when the transfer-destination delivery device delivers, and transfers the request to deliver the message to a transfer-destination delivery device of the lowest total cost.

46. A program causing a computer to function as an ID management device which can communicate with a plurality of delivery means run by a plurality of carriers respectively and delivering information to subscribers to the respective carriers in a communication system for delivering a message to a user, the program **characterized by** causing the computer to execute the functions of:
receiving a request for user identifier resolution to deliver the message from a delivery means; and
upon receiving the request for user identifier resolution from the delivery means, resolving a user identifier to which a carrier running the delivery means can deliver and to which a delivery of the message has not been allocated and returning the user identifier as a user identifier candidate to the delivery means.

47. The program according to claim 46, **characterized in that** the ID management device includes: an identifier federation storage means which stores by user and by carrier a plurality of user identifiers managed by the plurality of carriers, wherein the user identifiers federated with each other; and an allocated-user information storage means which registers by message a user already allocated a delivery of the message is registered, the program causing the computer to execute the functions of:
by referring to the identifier federation storage means and allocated-user information storage means, resolving a user identifier to which the carrier running the delivery means can deliver and to which a delivery has not been allocated and generating the user identifier candidate;
registering the resolved user with the allocated-user information storage means; and
returning the user identifier candidate to the delivery means.

48. The program according to claim 46, **characterized in that**, when there is another carrier that can deliver to a user who has not been allocated a delivery of the message, the program causes the computer to further execute the function of transmitting to the delivery means a transfer destination candidate including a delivery system of the other carrier as a transfer destination.

49. The program according to claim 48, **characterized in that** the ID management device includes: an identifier federation storage means which stores by user and by carrier a plurality of user identifiers managed by the plurality of carriers, wherein the user identifiers are federated with each other; and an allocated-user information storage means which registers by message a user already allocated a delivery of the message, the program causing the computer to execute the functions of:
by referring to the identifier federation storage means and allocated-user information storage means, resolving a user identifier to which the carrier running the delivery means can deliver and to which a delivery has not been allocated and generating the user identifier candidate;
registering the resolved user with the allocated-user information storage means;
returning the user identifier candidate to the delivery means;
by referring to the identifier federation storage means and allocated-user information storage means, retrieving another carrier that can deliver to a user who has not been allocated a delivery of the message and generating the transfer destination candidate; and
returning the transfer destination candidate to the delivery means.
